# EUROPEAN PATENT APPLICATION

(11) **EP 4 656 397 A1**
(43) Date of publication of application: **03.12.2025**
(21) Application number: 25178551.5
(22) Date of filing: 23.05.2025
(51) Int. Cl.: B41J 11/00, B65H 7/04, G03G 15/00, G03G 21/16

(54) **IMAGE FORMING SYSTEM, METHOD FOR CONTROLLING IMAGE FORMING APPARATUS, AND STORAGE MEDIUM**

(30) Priority: 27.05.2024 JP 2024085455
(71) Applicant: CANON KABUSHIKI KAISHA, Tokyo 146-8501 (JP)
(72) Inventor: HIGASHI, Shogo, Tokyo 146-8501 (JP)
(74) Representative: Canon Europe Limited

(57) **Abstract**

An image forming system includes a sheet holding apparatus and an image forming apparatus configured to form an image on a sheet conveyed from a sheet holding unit of the sheet holding apparatus. The sheet holding apparatus includes a display unit. The display unit is configured to, in a case where an amount of sheets held in the sheet holding unit decreases to a first amount before execution of a job is completed, issue notification using a first notification method, and in a case where the amount of sheets held in the sheet holding unit decreases to a second amount smaller than the first amount before the execution of the job is completed, issue notification using a second notification method.

## Description

### TECHNICAL FIELD

The present disclosure relates to an image forming system, a method for controlling an image forming apparatus, and a storage medium.

### BACKGROUND

Japanese Patent Application Laid-Open No. 2006-103947 discusses providing a plurality of light-emitting diodes (LEDs) near a sheet feed cassette. According to Japanese Patent Application Laid-Open No. 2006-103947, the plurality of LEDs is used as an indicator for displaying the remaining amount of sheets stored in the sheet feed cassette. Specifically, the remaining amount of sheets stored in the sheet feed cassette is displayed by changing the number of LEDs to light up.

However, the display unit discussed in Japanese Patent Application Laid-Open No. 2006-103947 merely displays the remaining amount of sheets stored in the sheet feed cassette. Users who issue instructions to execute printing therefore have difficulty in checking whether the sheet feed cassette contain the amount of sheets necessary for the printing. It is desirable to improve the convenience of the image forming apparatus from such a perspective, for example.

### SUMMARY

According to a first aspect of the present disclosure, there is provided an image forming system comprising a sheet holding apparatus (e.g., a means for holding, or storing sheets, such as a feeding unit); and an image forming apparatus configured to form an image on a sheet conveyed from a sheet holding unit of the sheet holding apparatus, wherein the sheet holding apparatus includes a display unit (e.g., a means of notifying the user of the system, such as a light emitting unit), and wherein the display unit is configured to, in a case where an amount of sheets held in the sheet holding unit decreases to a first amount before execution of a job is completed, issue a notification using a first notification method, and in a case where the amount of sheets held in the sheet holding unit decreases to a second amount smaller than the first amount before the execution of the job is completed, issue a notification using a second notification method.
According to a second aspect of the present disclosure, there is provided a method for controlling an image forming system including a sheet holding apparatus and an image forming apparatus configured to form an image on a sheet conveyed from a sheet holding unit of the sheet holding apparatus, the method comprising: issuing, in a case where an amount of sheets held in the sheet holding unit decreases to a first amount before execution of a job is completed, a notification by a display unit of the sheet holding unit using a first notification method; and issuing, in a case where the amount of sheets held in the sheet holding unit decreases to a second amount smaller than the first amount before the execution of the job is completed, a notification by the display unit using a second notification method.

According to a third aspect of the present disclosure, there is provided a computer readable storage medium for causing a computer to perform a method for controlling an image forming system including a sheet holding apparatus and an image forming apparatus configured to form an image on a sheet conveyed from a sheet holding unit of the sheet holding apparatus, the method comprising: issuing, in a case where an amount of sheets held in the sheet holding unit decreases to a first amount before execution of a job is completed, a notification by a display unit of the sheet holding unit using a first notification method; and issuing, in a case where the amount of sheets held in the sheet holding unit decreases to a second amount smaller than the first amount before the execution of the job is completed, a notification by the display unit using a second notification method.

Optional features will now be set out. These are applicable singly or in any combination with any aspect of the disclosure.

The image forming system may further comprise a plurality of sheet holding apparatuses including the sheet holding apparatus. Each of the plurality of sheet holding apparatuses may include a display unit. The display unit of each of the plurality of sheet holding apparatuses may be configured to, in a case where an amount of sheets held in the sheet holding unit decreases to the first amount before the execution of the job is completed, issue a notification using the first notification method.

The display unit may be configured to, in a case where a warning display time is reached, issue a notification using the first notification method. The warning display time may be determined with reference to a time at which the amount of sheets held in the sheet holding unit decreases to the first amount. The first amount may correspond to a situation where the sheets have run short.

The sheet holding apparatus may further include a plurality of sheet holding units including the sheet holding unit. The sheet holding apparatus may further include other display units (e.g., at least one further display unit) on at least one, or each, of the plurality of respective other sheet holding units. The other display units of the plurality of respective sheet holding units may be configured to issue a notification based on an error in the plurality of respective sheet holding units.

In a case where the amount of sheets held in the sheet holding unit decreases to the first amount before the execution of the job is completed, the display unit and another display unit of another sheet holding unit holding same sheets as the sheets may be configured to issue a notification using the first notification method.

The error may be an overloading (e.g., of sheets in the holding unit).

The error may be a malfunctioning of an instruction unit configured to open the sheet holding unit.

The display unit may be, or comprise, a light-emitting diode (LED). The first notification method may be a method for lighting up the LED in a first color. The second notification method may be a method for lighting up the LED in a second color different from the first color.

Further features of the present disclosure will become apparent from the following description of example embodiments with reference to the attached drawings.

### BRIEF DESCRIPTION OF THE DRAWINGS

Fig. 1 is a diagram illustrating an image forming system.
Fig. 2A is a diagram illustrating a configuration of a digital front end (DFE). Figs. 2B-1 and 2B-2 are a diagram illustrating a configuration of an image forming apparatus.
Fig. 3A is a diagram illustrating an external configuration of a feed unit. Fig. 3B is a diagram illustrating an external configuration of an image forming unit. Fig. 3C is a diagram illustrating an external configuration of a first fixing unit, a second fixing unit, a cooling unit, and a reversing unit. Fig. 3D is a diagram illustrating an external configuration of a discharge unit.
Fig. 4 is a diagram illustrating an internal configuration of the entire image forming apparatus.
Fig. 5 is a diagram illustrating a management screen.
Fig. 6 is a diagram illustrating the management screen in a case where a schedule setting section is selected.
Fig. 7 is a flowchart illustrating a first example of processing of the image forming system.
Fig. 8 is a chart illustrating a first example of lighting states of light-emitting units.
Fig. 9 is a flowchart illustrating a second example of the processing of the image forming system.
Fig. 10 is a chart illustrating a second example of the lighting states of the light-emitting units.
Fig. 11 is a flowchart illustrating a third example of the processing of the image forming system.
Fig. 12 is a chart illustrating a third example of the lighting states of the light-emitting units.
Fig. 13 is a flowchart illustrating a fourth example of the processing of the image forming system.
Fig. 14 is a chart illustrating a fourth example of the lighting states of the light-emitting units.
Fig. 15 is a flowchart illustrating a fifth example of the processing of the image forming system.
Fig. 16 is a chart illustrating a fifth example of the lighting states of the light-emitting units.

### DESCRIPTION OF THE EMBODIMENTS

Embodiments of the present disclosure will be described below with reference to the drawings.

A first embodiment will initially be described.

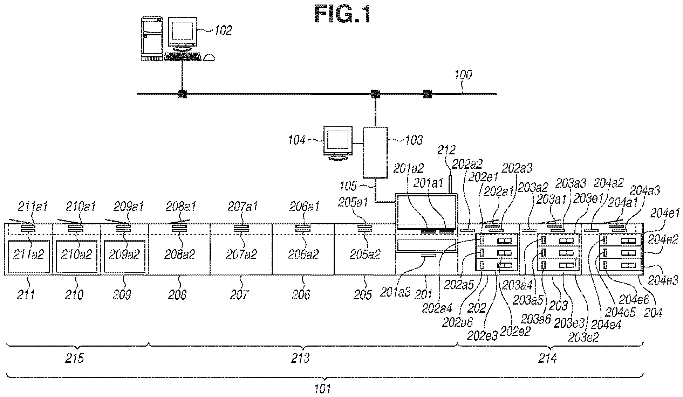

Fig. 1 is a block diagram illustrating an example of an image forming system according to the present embodiment. The present embodiment deals with a case where an image forming apparatus 101 is an inkjet printer. The image forming apparatus 101 may be a non-inkjet printer such as an electrophotographic printer. The image forming apparatus 101 may be a printer of multifunction peripheral type that includes a reading device such as a scanner. The present embodiment also deals with a case where an information processing apparatus 102 is a personal computer (PC). The information processing apparatus 102 may be a portable information terminal such as a smartphone and a tablet terminal. The present embodiment also deals with a case where the image forming apparatus 101 and the information processing apparatus 102 are connected via a network 100 in a manner capable of mutual communication. However, the communication between the image forming apparatus 101 and the information processing apparatus 102 is not limited to that via the network 100. The communication between the image forming apparatus 101 and the information processing apparatus 102 may be wired communication or wireless communication.

Fig. 1 illustrates a case where the image forming system includes one information processing apparatus 102. However, the image forming apparatus 101 and a plurality of information processing apparatuses may be connected via the network in a manner capable of mutual communication.

The present embodiment deals with a case where the image forming system includes the image forming apparatus 101 and the information processing apparatus 102. However, the image forming system is not limited to a system including the image forming apparatus 101 and the information processing apparatus 102. For example, the image forming system may be constituted by only the image forming apparatus 101. Moreover, during image formation processing that can be performed by the image forming apparatus 101 alone, the information processing apparatus 102 connected to the network 100 does not need to be included in the image forming system. Examples of the image formation processing that can be performed by the image forming apparatus 101 alone include processing for printing jobs stored in the image forming apparatus 101.

An example of the information processing apparatus 102 will initially be described. The information processing apparatus 102 executes various programs such as an application program for submitting print jobs. Moreover, various applications such as a printer driver and workflow software are installed on the information processing apparatus 102. Various applications implement functions including converting print data into a printer language supported by the image forming apparatus 101. The user who wants to print issues print instructions by using various applications. The printer driver and workflow software perform processing for converting data output from the applications based on the print instructions into print data interpretable by the image forming apparatus 101 and transmitting the print data to the image forming apparatus 101 connected to the network 100.

The method for transmitting the print data to the image forming apparatus 101 is not limited in particular. The print data may be transmitted from the information processing apparatus 102 to the image forming apparatus 101 via a printing application or the printer driver. The print data may be transmitted from the information processing apparatus 102 to the image forming apparatus 101 via a cloud server.

Next, an example of the image forming apparatus 101 will be described. The image forming apparatus 101 has a print function of printing images on sheets. The image forming apparatus 101 also has postprocessing functions. Examples of the postprocessing functions include a function of aligning a plurality of image-printed sheets, and a function of sorting and discharging a plurality of image-printed sheets to a plurality of trays. Examples of sheets include various sheets of paper such as plain paper, thick paper, and coated paper. The sheets may be non-paper sheets like overhead projector (OHP) films.

The present embodiment deals with a case where the image forming system further includes a digital front end (DFE) 103. The present embodiment deals with a case where a display device 104 is connected to the DFE 103 in a manner capable of communication. The display device 104 includes a computer display (e.g., a display unit) such as a liquid crystal display, for example. The DFE 103 and the display device 104 communicate via a communication cable, for example. The communication between the DFE 103 and the display device 104 may be wireless communication. The present embodiment deals with a case where the DFE 103 is connected to the image forming apparatus 101 via a network 105 in a manner capable of communication. The present embodiment deals with a case where the image forming apparatus 101 is connected to the network 100 via the DFE 103. In other words, the present embodiment deals with a case where the image forming apparatus 101 obtains information from the information processing apparatus 102 via the DFE 103. Examples of the information from the information processing apparatus 102 include execution instructions for print jobs. As described above, the present embodiment deals with the case where the DFE 103 and the image forming apparatus 101 communicate via the network 105. For example, the DFE 103 and the image forming apparatus 101 transmit and receive information such as print data, various commands, and status notifications via the network 105. The communication between the image forming apparatus 101 and the DFE 103 is not limited to that via the network 105. The communication between the image forming apparatus 101 and the DFE 103 may be wired communication or wireless communication. The image forming system does not necessarily need to include the DFE 103. As described above, the image forming system may be constituted by only the image forming apparatus 101, for example.

The present embodiment deals with a case where the image forming apparatus 101 includes a plurality of printing modules. Sheets are conveyed to the plurality of printing modules. The plurality of printing modules are apparatuses that perform part of a series of processes, including sheet feeding (e.g., supply) and discharging on the sheets conveyed to the printing modules. The present embodiment deals with a case where the plurality of printing modules are interconnected. The image forming apparatus 101 can perform complicated sheet processing using the plurality of printing modules. Examples of the respective printing modules constituting the image forming apparatus 101 will now be described. If the sheets are sheets of paper, feeding may be referred to as paper feeding.

A printer unit 213 forms (e.g., prints) an image on a sheet fed from a feed unit 214 (e.g., a sheet holding apparatus) using ink based on image data and fixes the image to the sheet by drying, for example. The present embodiment deals with a case where the printer unit 213 includes an image forming unit 201, a first fixing unit 205, a second fixing unit 206, a cooling unit 207, and a reversing unit 208. In such a case, the image forming unit 201, the first fixing unit 205, the second fixing unit 206, the cooling unit 207, and the reversing unit 208 are each an example of a printing module.

The image forming unit 201 includes yellow (Y), magenta (M), cyan (C), and black (K) color inkjet heads, for example. The inkjet heads are arranged in a straight line in a direction perpendicular to the conveyance direction of sheets, for example. The image forming unit 201 forms an image on a sheet by causing the color inkjet heads to discharge droplets based on image data to a sheet conveyed under the respective inkjet heads. To improve the landing and fixing properties of the droplets, a primer may be applied to the sheet prior to the discharge of the color inks. The present embodiment deals with a case where image formation processing is performed for each of the Y, M, C, and K colors. However, this is not restrictive. For example, inks of custom colors called spot colors may be used aside from the foregoing colors. Orange, violet, green, and other color inks may be used as additional color inks. Image formation processing for such colors may also be performed.

The sheet on which a full color image is thus formed is conveyed to the first fixing unit 205 and the second fixing unit 206. The first and second fixing units 205 and 206 include a heat source such as a heater inside. The first and second fixing units 205 and 206 fix the ink on the image-formed sheet to the sheet by thermally drying the ink. The sheet is then conveyed to the cooling unit 207. The cooling unit 207 cools the heated sheet.

The sheet cooled by the cooling unit 207 is conveyed to the reversing unit 208. The reversing unit 208 reverses the sheet orientation and conveys the sheet to the image forming unit 201 again to form an image on the back of the sheet. In the case of forming an image on only one side of the sheet, the reversing unit 208 does not need to reverse the sheet orientation.

The feed unit 214 continuously supplies sheets to form images on to the printer unit 213. Fig. 1 illustrates a case where the feed unit 214 includes three feed units 202 to 204 (e.g., sheet holding units). A discharge unit 215 accumulates the printed products (e.g., sheets). Fig. 1 illustrates a case where the discharge unit 215 includes three discharge units 209 to 211. Here, the feed units 202 to 204 and the discharge units 209 to 211 are each an example of a printing module.

A notification device 212 notifies the status of the image forming apparatus 101 by lighting up a lamp (for example, light-emitting diode [LED]). The present embodiment deals with a case where the lighting operation of the lamp by the notification device 212 is controlled by the DFE 103.

In the following description, the image forming unit 201, the feed units 202 to 204, the first fixing unit 205, the second fixing unit 206, the cooling unit 207, the reversing unit 208, and the discharge units 209 to 211 may be referred to collectively as printing modules 201 to 211 where appropriate.

The printing modules 201 to 211 constituting the image forming apparatus 101 include light-emitting units 201a1 to 211a1, 201a2 to 211a2, 201a3 to 204a3, 202a4 to 204a4, 202a5 to 204a5, and 202a6 to 204a6. The light-emitting units 201a1 to 211a1, 201a2 to 211a2, 201a3 to 204a3, 202a4 to 204a4, 202a5 to 204a5, and 202a6 to 204a6 include LEDs, for example. The light-emitting units 201a1 to 211a1, 201a2 to 211a2, 201a3 to 204a3, 202a4 to 204a4, 202a5 to 204a5, and 202a6 to 204a6 notify the user, in an identifiable manner, of the occurrence of events in the printing modules 201 to 211 where the light-emitting units are disposed. For example, the occurrence of events in the printing modules 201 to 211 can be notified to the user in an identifiable manner by changing the light emission modes. Examples of the light emission modes include at least one of the following: the presence or absence of lighting, lighting color, lighting intensity (e.g., brightness during lighting), lighting time, and an on-off pattern. The present embodiment deals with a case where the notifications made by the light-emitting units are different from ones of which notification content is changed by changing a shape expressed by an on-off combination of multiple light-emitting units. Examples of the information to be notified include characters, figures, and symbols. The light-emitting units 201a1 to 211a1, 201a2 to 211a2, and 201a3 to 204a3 may identifiably notify the user of the positions and content of events occurring in the printing modules 201 to 211 where the light-emitting units are disposed. Examples of the user include the owners and users of the image forming apparatus 101, the information processing apparatus 102, and the DFE 103.

Three examples will be described as specific examples of notification made by the light-emitting units 201a1 to 211a1, 201a2 to 211a2, and 201a3 to 204a3.

A first example will initially be described. Suppose that a sheet conveyed to the second fixing unit 206 gets stalled in the second fixing unit 206 (e.g., a jam occurs). In such a case, for example, the light-emitting unit 206a1 or 206a2 included in the second fixing unit 206 lights up in red to notify the user of the occurrence of an event that makes printing difficult to continue due to the stalling of the sheet. Here, both the light-emitting units 206a1 and 206a2 of the second fixing unit 206 may light up in red, for example.

Next, a second example will be described. Suppose that the feed unit 202, 203, or 204 runs out of sheets during execution of a print job, and the processing becomes difficult to continue.

In such a case, for example, the light-emitting unit 202a3, 203a3, or 204a3 (e.g., a display unit) of that feed unit 202, 203, or 204 lights up in red to notify the user that the feed unit 202, 203, or 204 has run out of sheets. Here, all the light-emitting units 202a3 to 204a3 of the feed units 202 to 204 may light up in red.

Next, a third example will be described. Suppose that the amount of sheets stacked in the discharge unit 209, 210, or 211 reaches a predetermined amount during execution of a print job, and no more sheets can be stacked. In such a case, for example, the light-emitting unit 209a1, 210a1, or 211a1 of the discharge unit 209, 210, or 211 lights up in red to notify the user that the discharge unit 209, 210, or 211 is unable to stack sheets. In such a case, all the light-emitting units 209a1 to 211a1 of the discharge units 209 to 211 may light up in red.

Information equivalent to that notified by the light-emitting units 201a1 to 211a1, 201a2 to 211a2, and 201a3 to 204a3 can also be notified using the display device 104 connected to the DFE 103 or the notification device 212. However, the user needs to determine in which printing module the event occurs among the large number of printing modules constituting the image forming apparatus 101, as well as the content of the event occurring in the printing module. The user then needs to move to the location where the display device 104 is installed, and checks the content of the information displayed on the display device 104. Meanwhile, the user has difficulty being quickly notified about which of the large number of printing modules the event has occurred in through the lighting operation of the lamp of the notification device 212.

By contrast, the present embodiment deals with a case where the light-emitting units 201a1 to 211a1, 201a2 to 211a2, and 201a3 to 204a3 are disposed on the printing modules 201 to 211 at positions visible to the user from outside the image forming apparatus 101. Examples of the positions visible to the user from outside the image forming apparatus 101 are positions at the surfaces of the printing modules 201 to 211.

The positions visible to the user from outside the image forming apparatus 101 may be positions inside the printing modules 201 to 211, for example. In such a case, the printing modules 201 to 211 may have holes through which the inside and outside of the printing modules 201 to 211 communicate. The light-emitting units 201a1 to 211a1, 201a2 to 211a2, and 201a3 to 204a3 may be visually observed by the user from outside the image forming apparatus 101 through the holes. The present embodiment deals with a case where all the printing modules 201 to 211 of the image forming apparatus 101 are provided with the light emitting units 201a1 to 211a1, 201a2 to 211a2, and 201a3 to 204a3. However, this is not restrictive. For example, there may be a printing module or modules without light-emitting units as long as there is at least one printing module provided with light-emitting units. For example, two or more out of all the printing modules 201 to 211 of the image forming apparatus 101 may be provided with light-emitting units. The two or more printing modulus may be as many as all the printing modules of the image forming apparatus 101, or fewer than all the printing modules of the image forming apparatus 101. The more printing modules are provided with light-emitting units, the more desirable.

The reason is that the number of printing modules where the light-emitting units notify the occurrence of events can be increased.

The present embodiment deals with a case where the occurrence of events is notified using such a light-emitting elements 201a1 to 211a1, 201a2 to 211a2, and 201a3 to 204a3. The present embodiment deals with a case where a light-emitting element or elements included in the printing module where an event has occurred are selectively lit. The user can thus quickly identify the printing module where the event has occurred without approaching the image forming apparatus 101 (e.g., light-emitting units). The user can also identify the type of event occurred based on the lighting color of the light-emitting unit. The light-emitting units 201a1 to 211a1, 201a2 to 211a2, and 201a3 to 204a3 can thus facilitate the user's understanding of the event. The operability and convenience of the image forming apparatus 101 can thereby be improved. Specific examples of the light-emitting units 202a4 to 204a4, 202a5 to 204a5, and 202a6 to 204a6 will be described below.

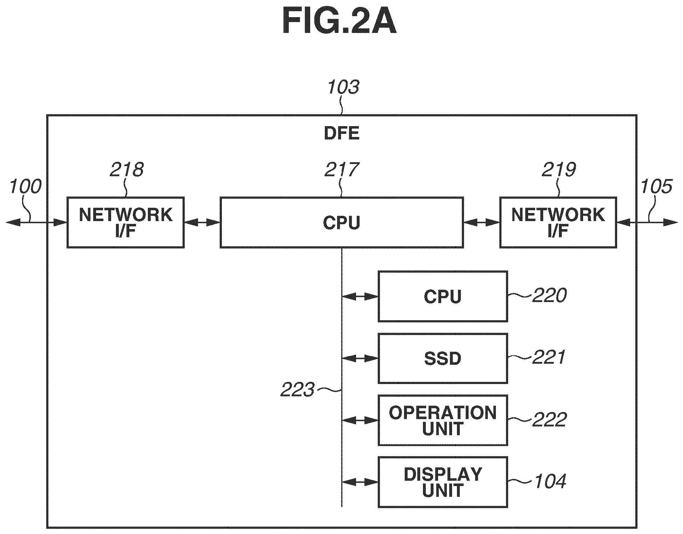

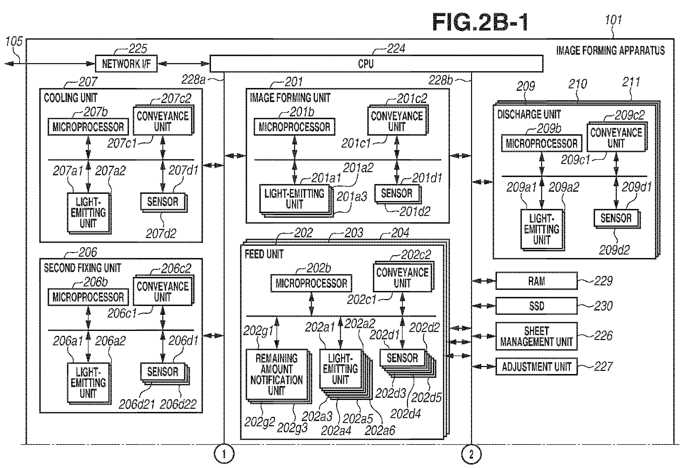

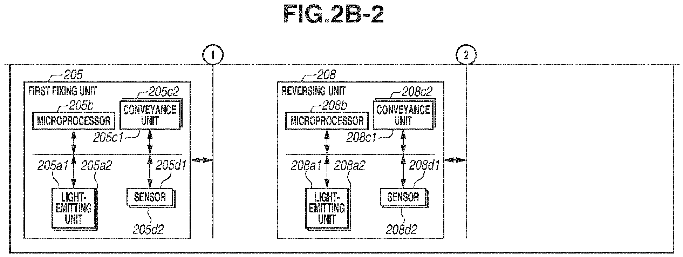

Fig. 2A is a diagram illustrating an example of a configuration of the DFE 103. Figs. 2B-1 and 2B-2 are a diagram illustrating an example of a configuration of the image forming apparatus 101. The blocks illustrated in Figs. 2A and 2B-1 and 2B-2 are divided in units as a system. There are therefore portions not necessarily corresponding to the units of the configuration illustrated in Fig. 1. An example of the internal configuration of the DFE 103 and the image forming apparatus 101 will now be described.

The example of the internal configuration of the DFE 103 will initially be described.

In Fig. 2A, a network interface (I/F) 218 is used to communicate with external apparatuses connected to the network 100. For example, the network I/F 218 receives print job data transmitted from an external apparatus such as the information processing apparatus 102. The network I/F 218 also transmits information about the status of the image forming apparatus 101 to an external apparatus. The print job data received by the network I/F 218 is processed, for example, by a central processing unit (CPU) 217 reading various programs stored in a solid-state drive (SSD) 221 into a random access memory (RAM) 220 and executing the programs.

Specific examples of the processing to be executed thus include a series of print job-related processes. For example, the series of print job-related processes includes loading of print job data, raster image processor (RIP) processing, image conversion processing, and color conversion processing. The DFE 103 includes an operation unit 222. Various settings of the DFE 103, job settings, and adjustment instructions for the image forming apparatus 101 are instructed and executed by the user via the operation unit 222. The CPU 217 and various modules are connected to each other via a system bus 223.

The processing of the CPU 217 may be performed by one or more processors different from the CPU 217 (for example, a graphics processing unit [GPU]) in addition to or instead of the CPU 217. A plurality of pieces of hardware may share processing to implement the processing of the CPU 217. At least part of the processing of the CPU 217 may be performed using dedicated hardware. Examples of the dedicated hardware include an application specific integrated circuit (ASIC) and a field-programmable gate array (FPGA). That the processor is not limited to a particular one (such as CPU), that a plurality of pieces of hardware shares processing, and that dedicated hardware can be used apply to apparatuses other than the DFE 103 as well.

The print job data processed by the DFE 103 is transmitted to the image forming apparatus 101 by the network I/F 218 via the network 105.

Next, the example of the internal configuration of the image forming apparatus 101 will be described.

A network I/F 225 is used to communicate with external apparatuses connected to the network 105. For example, the network I/F 225 is connected to the network I/F 219 of the DFE 103 via the network 105 in a manner capable of mutual communication. In such a case, the network I/F 225 receives print job data from the DFE 103, for example. The network I/F 225 is also used to transmit and receive statuses and commands to/from the DFE 103.

A CPU 224 is a unit that governs the overall operation of the image forming apparatus 101. The present embodiment deals with a case where the CPU 224 control modules of the image forming apparatus 101, including the printing modules 201 to 211. The modules are connected to the CPU 224 via system buses 228a and 228b in a manner capable of mutual communication.

The CPU 224 performs various types of processing by reading various programs stored in an SSD 230 into a RAM 229 and executing the programs.

The present embodiment deals with a case where the DFE 103 and the image forming apparatus 101 include the respective different CPUs 217 and 224. However, this is not restrictive. For example, the DFE 103 and the image forming apparatus 101 may be controlled by the same CPU.

A sheet management unit 226 is a database that constitutes a sheet library of the image forming apparatus 101. The sheet management unit 226 stores parameters of various types of sheets. An adjustment unit 227 includes various sensors. The adjustment unit 227 performs various calibrations and controls the various sensors. The present embodiment deals with a case where, in addition to these modules, the printing modules 201 to 211 are mutually connected with the CPU 224 via the system buses 228a and 228b in a manner capable of communication.

As described above, the present embodiment deals with the case where the image forming apparatus 101 includes the image forming unit 201, the feed units 202 to 204, the first fixing unit 205, the second fixing unit 206, the cooling unit 207, the reversing unit 208, and the discharge units 209 to 211 as the printing modules. Examples of the internal configurations of the printing modules will now be described.

An example of the internal configuration of the cooling unit 207 will initially be described.

A microprocessor 207b controls submodules included in the cooling unit 207, and exchanges control commands and status notifications with the CPU 224.

Conveyance units 207c1 and 207c2 are sheet conveyance units. The conveyance units 207c1 and 207c2 convey sheets through upper and lower conveyance paths, respectively. The conveyance processing of the conveyance units 207c1 and 207c2 is controlled by the microprocessor 207b. Passage sensors 207d1 and 207d2 are sensors disposed at downstream portions (e.g., exit portions) of the conveyance units 207c1 and 207c2, respectively. The passage sensors 207d1 and 207d2 are sensors for detecting the presence or absence of a sheet at the downstream portions of the conveyance units 207c1 and 207c2, respectively. The passage sensors 207d1 and 207d2 are mainly used for detection processing of sheet stalling occurring in the conveyance units 207c1 and 207c2 inside the cooling unit 207.

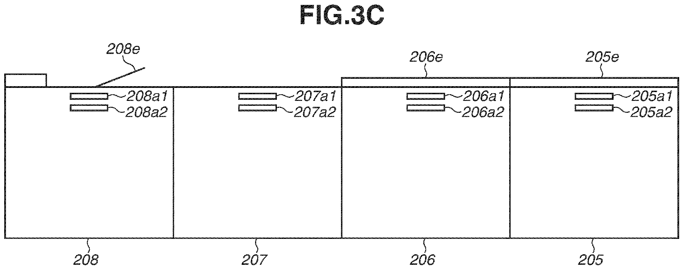

The light-emitting units 207a1 and 207a2 are intended to notify the position and content of an event occurring in the cooling unit 207. The light-emitting units 207a1 and 207a2 include an LED, for example. The present embodiment deals with a case where the position and content of an event occurring in the cooling unit 207 are notified using the positions and colors of the light-emitting units 207a1 and 207a2 lit up. A detailed example of which light-emitting unit lights up in which color when what event occurs will be described below with reference to Fig. 3C. As described above, the position and content of an event occurred may be notified by using methods other than the positions and colors of the light-emitting units 207a1 and 207a2 lit up, like lighting time, lighting intensity, and an on-off pattern. That the method for notifying the position and content of an event occurred is not limited applies to the light-emitting units included in the printing modules other than the cooling unit 207 as well.

Next, an example of the internal configuration of the first fixing unit 205 will be described.

A microprocessor 205b controls submodules included in the first fixing unit 205, and exchanges control commands and status notifications with the CPU 224. Conveyance units 205c1 and 205c2 are sheet conveyance units. The conveyance units 205c1 and 205c2 convey sheets through upper and lower conveyance paths, respectively. The conveyance processing of the conveyance units 205c1 and 205c2 is controlled by the microprocessor 205b. Passage sensors 205d1 and 205d2 are sensors disposed at downstream portions (e.g., exit portions) of the conveyance units 205c1 and 205c2, respectively. The passage sensors 205d1 and 205d2 are sensors for detecting the presence or absence of a sheet at the downstream portions of the conveyance units 205c1 and 205c2, respectively. The passage sensors 205d1 and 205d2 are mainly used for detection processing of sheet stalling occurring in the conveyance units 205c1 and 205c2 inside the first fixing unit 205.

The light-emitting units 205a1 and 205a2 are intended to notify the position and content of an event occurring in the first fixing unit 205. The light-emitting units 205a1 and 205a2 include an LED, for example. The present embodiment deals with a case where the position and content of an event occurring in the first fixing unit 205 are notified using the positions and colors of the light-emitting units 205a1 and 205a2 lit up. A detailed example of which light-emitting unit lights up in which color when what event occurs will be described below with reference to Fig. 3C.

Next, an example of the internal configuration of the second fixing unit 206 will be described.

A microprocessor 206b controls submodules included in the second fixing unit 206, and exchanges control commands and status notifications with the CPU 224. Conveyance units 206c1 and 206c2 are sheet conveyance units. The conveyance units 206c1 and 206c2 convey sheets through upper and lower conveyance paths, respectively. The conveyance processing of the conveyance units 206c1 and 206c2 is controlled by the microprocessor 206b. A passage sensor 206d and passage sensors 206d21 and 202d22 are sensors disposed at downstream portions (e.g., exit portions) of the conveyance unit 206c1 and the conveyance unit 206c2, respectively. The passage sensor 206d1 and the passage sensors 206d21 and 206d22 are sensors for detecting the presence or absence of a sheet at the downstream portions of the conveyance unit 206c1 and the conversion unit 206c2, respectively. The passage sensors 206d1, 206d21, and 206d22 are mainly used for detection processing of sheet stalling occurring in the conveyance units 206c1 and 206c2 inside the second fixing unit 206.

The light-emitting units 206a1 and 206a2 are intended to notify the position and content of an event occurring in the second fixing unit 206. The light-emitting units 206a1 and 206a2 include an LED, for example. The present embodiment deals with a case where the position and content of an event occurring in the second fixing unit 206 are notified using the positions and colors of the light-emitting units 206a1 and 206a2 lit up. A detailed example of which light-emitting unit lights up in which color when what event occurs will be described below with reference to Fig. 3C.

Next, an example of the internal configuration of the image forming unit 201 will be described.

A microprocessor 201b controls submodules included in the image forming unit 201, and exchanges control commands and status notifications with the CPU 224. Conveyance units 201c1 and 201c2 are sheet conveyance units. The conveyance units 201c1 and 201c2 convey sheets through upper and lower conveyance paths, respectively. The conveyance processing of the conveyance units 201c1 and 201c2 is controlled by the microprocessor 201b. Passage sensors 201d1 and 201d2 are sensors disposed at downstream portions (e.g., exit portions) of the conveyance units 201c1 and 201c2, respectively. The passage sensors 201d1 and 201d2 are sensors for detecting the presence or absence of a sheet at the downstream portions of the conveyance units 201c1 and 201c2, respectively.

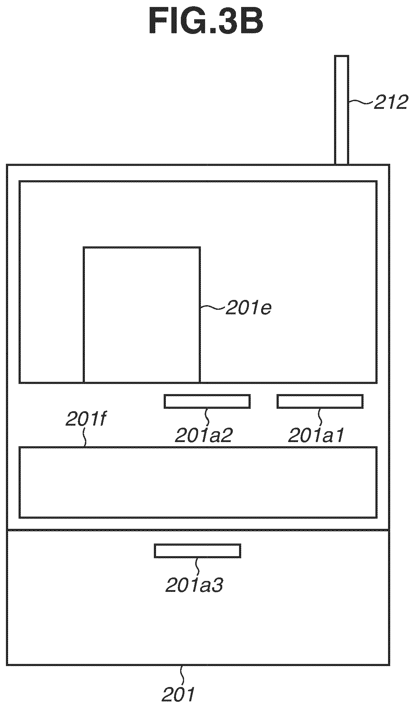

The light-emitting units 201a1 to 201a3 are intended to notify the position and content of an event occurring in the image forming unit 201. The light-emitting units 201a1 to 201a3 include an LED, for example. The present embodiment deals with a case where the position and content of an event occurring in the image forming unit 201 are notified using the positions and colors of the light-emitting units 201a1 to 201a3 lit up. A detailed example of which light-emitting unit lights up in which color when what event occurs will be described below with reference to Fig. 3B.

Next, an example of the internal configuration of the feed units 202 to 204 will be described. The present embodiment deals with an example where the feed units 202 to 204 are examples of feed units that store (e.g., hold) and feed sheets.

The present embodiment deals with an example where feed stages 202e1 to 202e3, 203e1 to 203e3, and 204e1 to 204e3 are examples of supply stages. The embodiment deals with an example where the feed units 202 to 204 have the same internal configuration. Only an example of the internal configuration of the feed unit 202 will therefore be described, and a detailed description of the feed units 203 and 204 will be omitted. At least one of the feed units 202 to 204 may have a different internal configuration.

A microprocessor 202b controls submodules included in the feed unit 202, and exchanges control commands and status notifications with the CPU 224. Conveyance units 202c1 and 202c2 are sheet conveyance units. The conveyance units 202c1 and 202c2 convey sheets through upper and lower conveyance paths, respectively. The conveyance processing of the conveyance units 202c1 and 202c2 is controlled by the microprocessor 202b. Passage sensors 202d1 and 202d2 are sensors disposed at downstream portions (e.g., exit portions) of the conveyance units 202c1 and 202c2, respectively. The passage sensors 202d1 and 202d2 are sensors for detecting the presence or absence of a sheet at the downstream portions of the conveyance units 202c1 and 202c2, respectively. The passage sensors 202d1 and 202d2 are mainly used for detection processing of sheet stalling occurring in the conveyance units 202c1 and 202c2 inside the feed unit 202.

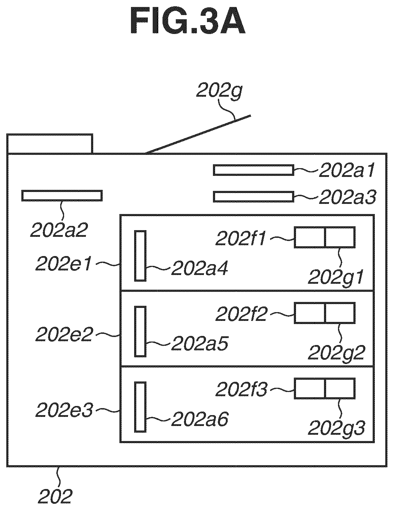

Remaining amount detection sensors 202d3, 202d4, and 202d5 are sensors disposed at the feed stages 202e1, 202e2, and 202e3 included in the feed unit 202. The remaining amount detection sensors 202d3, 202d4, and 202d5 are sensors for measuring the remaining amounts of sheets stored (e.g., stacked) in the feed stages 202e1, 202e2, and 202e3, respectively. The present embodiment deals with a case where the remaining amount detection sensors 202d3, 202d4, and 202d5 are attached to the bottoms of the feed stages 202e1, 202e2, and 202e3, respectively. As the remaining amounts of sheets stored in the feed stages 202e1 to 202e3 change, trays inside the feed stages 202e1 to 202e3 move up or down. The remaining amount detection sensors 202d3 to 202d5 can measure the remaining amounts of sheets stored in the trays by detecting the amounts of vertical movement of the trays, for example. The remaining amount detection sensors 202d3 to 202d5 are mainly used for remaining amount display processing of the sheets stored in the feed stages 202e1 to 202e3, and calculation processing of paper-out occurrence times for print jobs in process and on standby. Remaining amount notification units 202g1, 202g2, and 202g3 issue notification of the remaining amounts of sheets stored in the feed stages 202e1, 202e2, and 202e3 of the feed unit 202, respectively. A specific example of the remaining amount notification units 202g1 to 202g3 will be described below with reference to Fig. 3A.

The light-emitting units 202a1 to 202a3 are intended to notify the position and content of an event occurring in the feed unit 202. The light-emitting units 202a1 to 202a3 include an LED, for example. The present embodiment deals with a case where the position and content of an event occurring in the feed unit 202 are notified using the positions and colors of the light-emitting units 202a1 to 202a3 lit up. The light-emitting units 202a4 to 202a6 are intended to notify various statuses of the feed stages 202e1 to 202e3. The light-emitting units 202a4 to 202a6 include an LED, for example. A detailed example of which light-emitting unit lights up in which color when what event occurs will be described below with reference to Fig. 3A. In the present embodiment, the light-emitting units including the light-emitting units 202a1 to 202a6 are described to light up in specific colors, whereas the lighting colors of all the light-emitting units may be variable and can be any colors. The present embodiment deals with examples of a case where a first light-emitting unit are implemented by the light-emitting units 202a3, 203a3, and 204a3. The present embodiment also deals with a case where examples of a second light-emitting unit are implemented by the light-emitting units 202a4 to 202a6, 203a4 to 203a6, and 204a4 to 204a6. The present embodiment deals with a case where examples of a notification unit are implemented by the remaining amount notification units 202g1 to 202g3.

Next, an example of the internal configuration of the reversing unit 208 will be described.

A microprocessor 208b controls submodules included in the reversing unit 208, and exchanges control commands and status notifications with the CPU 224. Conveyance units 208c1 and 208c2 are sheet conveyance units. The conveyance units 208c1 and 208c2 convey sheets through upper and lower conveyance paths, respectively. The conveyance processing of the conveyance units 208c1 and 208c2 is controlled by the microprocessor 208b. Passage sensors 208d1 and 208d2 as an example of detection units are sensors disposed at downstream portions (e.g., exit portions) of the conveyance units 208c1 and 208c2, respectively. The passage sensors 208d1 and 208d2 are sensors for detecting the presence or absence of a sheet at the downstream portions of the conveyance units 208c1 and 208c2, respectively. The passage sensors 208d1 and 208d2 are mainly used for detection processing of sheet stalling occurring in the conveyance units 208c1 and 208c2 inside the reversing unit 208.

The light-emitting units 208a1 and 208a2 are intended to notify the position and content of an event occurring in the reversing unit 208. The light-emitting units 208a1 and 208a2 include an LED, for example. The present embodiment deals with a case where the position and content of an event occurring in the reversing unit 208 are notified using the positions and colors of the light-emitting units 208a1 and 208a2 lit up. A detailed example of which light-emitting unit lights up in which color when what event occurs will be described below with reference to Fig. 3C.

Next, an example of the internal configuration of the discharge units 209 to 211 will be described. The present embodiment deals with a case where the discharge units 209 to 211 have the same internal configuration. Only an example of the internal configuration of the discharge unit 209 will thus be described, and a detailed description of the discharge units 210 and 211 will be omitted. At least one of the discharge units 209 to 211 may have a different internal configuration.

A microprocessor 209b controls submodules included in the discharge unit 209, and exchanges control commands and status notifications with the CPU 224. Conveyance units 209c1 and 209c2 are sheet conveyance units. The conveyance units 209c1 and 209c2 convey sheets through upper and lower conveyance paths, respectively. The conveyance processing of the conveyance units 209c1 and 209c2 is controlled by the microprocessor 209b. Passage sensors 209d1 and 209d2 are sensors disposed at downstream portions of the conveyance units 209c1 and 209c2, respectively. The passage sensors 209d1 and 209d2 are sensors for detecting the presence or absence of a sheet at the downstream portions of the conveyance units 209c1 and 209c2, respectively. The passage sensors 209d1 and 209d2 are mainly used for detection processing of sheet stalling occurring in the conveyance units 209c1 and 209c2 inside the discharge unit 209.

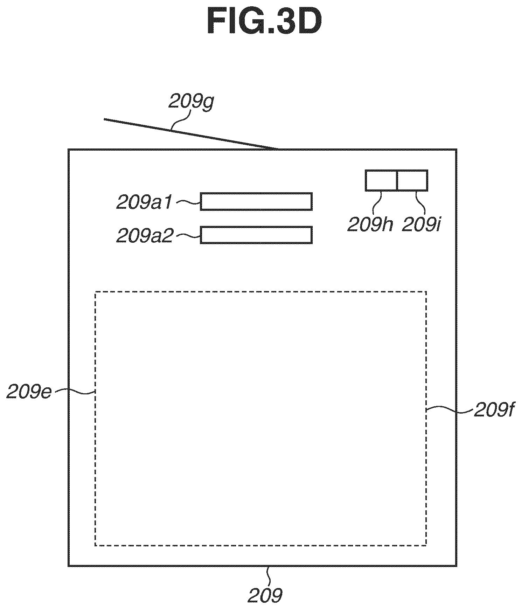

The light-emitting units 209a1 and 209a2 are intended to notify the position and content of an event occurring in the discharge unit 209. The light-emitting units 209a1 and 209a2 include an LED, for example. The present embodiment deals with a case where the position and content of an event occurring in the discharge unit 209 are notified using the positions and colors of the light-emitting units 209a1 and 209a2 lit up. A detailed example of which light-emitting unit lights up in which color when what event occurs will be described below with reference to Fig. 3D.

Fig. 3A is a diagram illustrating an example of an external configuration of the feed unit 202. The present embodiment deals with a case where the feed units 202 to 204 have the same external configuration. Only the example of the external configuration of the feed unit 202 will therefore be described, and a detailed description of the feed units 203 and 204 will be omitted. At least one of the feed units 202 to 204 may have a different external configuration.

Fig. 3A illustrates a case where the feed unit 202 includes the three feed stages 202e1 to 202e3. The feed stages 202e1 to 202e3 can store respective different sheet types and sizes of sheets. The feed stages 202e1, 202e2, and 202e3 include open instruction units 202f1, 202f2, and 202f3, and the remaining amount notification units 202g1, 202g2, and 202g3, respectively. The feed stages 202e1, 202e2, and 203e3 also include the light-emitting units 202a4, 202a5, and 202a6, respectively. The light-emitting units 202a4, 202a5, and 202a6 notify various statuses of the feed stages 202e1, 202e2, and 202e3, respectively. When the open instruction units 202f1, 202f2, and 202f3 are operated, the trays of the feed stages 202e1, 202e2, and 202e3 are drawn out from the feed unit 202, respectively. The remaining amount notification units 202g1, 202g2, and 202g3 notify the remaining amounts of sheets stored in the feed stages 202e1, 202e2, and 202e3, respectively. For example, the remaining amount notification units 202g1 to 202g3 issue notification of the remaining amounts of sheets stored in the feed stages 202e1 to 202e3 stepwise. The present embodiment deals with a case where the remaining amount notification units 202g1 to 202g3 include a plurality of LEDs each. The remaining amount notification units 202g1, 202g2, and 202g3 change the number of LEDs to light up among the plurality of LEDs based on the remaining amounts of sheets stored in the feed stages 202e1, 202e2, and 202e3, respectively. In such a case, the lit areas vary in length depending on the on-off combinations of the LEDs.

The user can identify the remaining amounts of sheets based on the lengths. As described above, the present embodiment also deals with a case where the notifications made by the light-emitting units 202a1 to 202a6 are different from those using information of which notification content is identified based on variable shapes expressed by the on-off combinations of the light-emitting units. The present embodiment thus deals with a case where the mode of notification using the light-emitting units 202a1 to 202a6 and the mode of notification using the light-emitting units 202g1, 202g2, and 202g3 are different.

The present embodiment deals with a case where the light-emitting units 202a4, 202a5, and 202a6 light up in green when the feed stages 202e1, 202e2, and 202e3 are currently feeding sheets, respectively. The present embodiment also deals with a case where the light-emitting units 202a4, 202a5, and 202a6 light up in red when an error occurs in the feed stages 202e1, 202e2, and 202e3, respectively. Examples of error cases include where sheets are overloaded, and where the open instruction units 202f1 to 202f3 do not function normally.

An escape tray 202g is a tray to which sheets that may end up in being folded or multi-fed are discharged, so that such sheets will not be conveyed to the image forming unit 201.

Although not illustrated in Fig. 3A, the feed unit 202 includes the remaining amount detection sensors 202d3 to 202d5 as described above.

The present embodiment deals with a case where the feed unit 202 includes the three light-emitting units 202a1 to 202a3. The present embodiment deals with a case where the three light-emitting units 202a1 to 202a3 are located within the feed unit 202, at positions different from the feed stages 202e1 to 202e3. The present embodiment deals with a case where the light-emitting unit 202a1 is disposed on the front surface of the feed unit 202, above the light-emitting unit 202a2. The present embodiment deals with a case where the lower light-emitting unit 202a2 of the feed unit 202 lights up in red when a sheet stalls in the lower conveyance unit 202c2 inside the feed unit 202. The present embodiment deals with a case where the upper light-emitting unit 202a1 of the feed unit 202 lights up in red when a sheet stalls in the upper conveyance unit 202c1 inside the feed unit 202. The present embodiment deals with a case where the light-emitting unit 201a1 notifies a case different from sheet stalling as a state of the feed unit 202. Specifically, the present embodiment deals with a case where the light-emitting unit 202a1 also lights up in red when the escape tray 202g is full of discharged sheets (e.g., tray-full state). The present embodiment deals with a case where the light-emitting unit 201a1 lights up in yellow when the escape tray 202g approaches the tray-full state.

When the escape tray 202g is full of discharged sheets (e.g., tray-full state), the light-emitting unit 202a1 may light up in color other than red or yellow, for example.

The present embodiment deals with a case where the light-emitting unit 202a3 of the feed unit 202 is used to notify the remaining amount of sheets set for use in print jobs in process and on standby among the sheets stored in the feed stages 202e1 to 202e3. For example, the microprocessor 202b calculates the amount of sheets set to be used for the print job in process among the sheets stored in the feed stages 202e1 to 202e3. The amount of sheets set to be used for the print job in process among the sheets stored in the sheet feed stages 202e1 to 202e3 refers to the remaining amount of sheets set to be used for the print job in process in the feed stages 202e1 to 202e3. The microprocessor 202b compares the remaining amount of sheets set to be used for the print job in process in the feed stages 202e1 to 202e3 with the amount of sheets that are set for use in the print job and not used yet. The amount of sheets that are set for use in a print job and not used yet refers to the remaining amount of sheets scheduled to be printed in the print job.

If the microprocessor 202b determines, based on the result of the comparison, that the sheets will run short before the print job is completed, the microprocessor 202b lights up the light-emitting unit 202a3 in yellow. If the microprocessor 202b determines that the sheets have actually run out, the microprocessor 202b lights up the light-emitting unit 202a3 in red. If an error occurs in any of the sheet feed stages 202e1 to 202e3, the microprocessor 202b lights up the light-emitting unit 202a3 in red. Examples of error cases include where sheets are overloaded, and where the open instruction units 202f1 to 202f3 do not function normally.

In addition to or instead of the case where a print job is in process, the microprocessor 202b may perform the foregoing comparison and light up the light-emitting unit 202a3 based on the result of the comparison when the image forming apparatus 101 is on standby for execution of a print job.

The lighting color of the light-emitting unit 202a3 is not limited to yellow or red. As described above, examples of the light emission modes include at least one of the following: the presence or absence of lighting, lighting color, lighting intensity, lighting time, and an on-off pattern. The display based on the statuses of the feed stages 202e1 to 202e3 can be provided by changing at least one of these. In the foregoing example, the statuses of the feed stages 202e1 to 202e3 include a state where sheets will run short before a print job is completed, a state where the sheets have actually run out, and a state where an error occurs in any of the feed stages 202e1 to 202e3.

Fig. 3B is a diagram illustrating an example of an external configuration of the image forming unit 201.

As described above, the notification device 212 notifies the status of the image forming apparatus 101 by turning the lamp on.

The image forming unit 201 includes a head unit 201e. For example, the head unit 201e includes inkjet heads and a control unit of the inkjet heads. An ink tank control unit 201f performs ink replenishment and waste ink replacement processing, and displays the remaining ink levels.

The present embodiment deals with a case where the light-emitting units 201a1 and 201a2 light up in red when a sheet stalls in the upper conveyance unit 201c1 inside the image forming unit 201. The present embodiment deals with a case where the lower light-emitting unit 201a3 lights up in red when a sheet stalls in the lower conveyance unit 201c2 inside the image forming unit 201.

Fig. 3C is a diagram illustrating an example of an external configuration of the first fixing unit 205, the second fixing unit 206, the cooling unit 207, and the reversing unit 208. The present embodiment deals with a case where the reversing unit 208 includes an escape tray 208e. Sheets in the conveyance paths within the image forming apparatus 101 are discharged to the escape tray 208e when an error occurs in the image forming apparatus 101.

The first and second fixing units 205 and 206 heat sheets to dry by using heaters. The present embodiment deals with a case where covers 205e and 206e are therefore disposed on top of the first and second fixing units 205 and 206, respectively, to prevent the user from accidentally touching the heating portions of the first and second fixing units 205 and 206.

The present embodiment deals with a case where the light-emitting unit 205a1 is disposed on the front surface of the first fixing unit 205, above the light-emitting unit 205a2. The present embodiment deals with a case where the upper light-emitting unit 205a1 of the first fixing unit 205 lights up in red when a sheet stalls in the upper conveyance unit 205c1 inside the first fixing unit 205. The present embodiment deals with a case where the lower light-emitting unit 205a2 of the first fixing unit 205 lights up in red when a sheet stalls in the lower conveyance unit 205c2 inside the first fixing unit 205.

The present embodiment deals with a case where the light-emitting unit 206a1 is disposed on the front surface of the second fixing unit 206, above the light-emitting unit 206a2. The present embodiment deals with a case where the upper light-emitting unit 206a1 of the second fixing unit 206 lights up in red when a sheet stalls in the upper conveyance unit 206c1 inside the second fixing unit 206. The present embodiment deals with a case where the lower light-emitting unit 206a2 of the second fixing unit 206 lights up in red when a sheet stalls in the lower conveyance unit 206c2 inside the second fixing unit 206.

The present embodiment deals with a case where the light-emitting unit 207a1 is disposed on the front surface of the cooling unit 207, above the light-emitting unit 207a2. The present embodiment deals with a case where the upper light-emitting unit 207a1 of the cooling unit 207 lights up in red when a sheet stalls in the upper conveyance unit 207c1 inside the cooling unit 207. The present embodiment deals with a case where the lower light-emitting unit 207a2 of the cooling unit 207 lights up in red when a sheet stalls in the lower conveyance unit 207c2 inside the cooling unit 207.

The present embodiment deals with a case where the light-emitting unit 208a1 is disposed on the front surface of the reversing unit 208, above the light-emitting unit 208a2. The present embodiment deals with a case where the upper light-emitting unit 208a1 of the reversing unit 208 lights up in red when a sheet stalls in the upper conveyance unit 208c1 inside the reversing unit 208. The present embodiment deals with a case where the lower light-emitting unit 208a2 of the reversing unit 208 lights up in red when a sheet stalls in the lower conveyance unit 208c2 inside the reversing unit 208.

Fig. 3D is a diagram illustrating an example of an external configuration of the discharge unit 209. The present embodiment deals with a case where the discharge units 209 to 211 have the same external configuration. Only the example of the external configuration of the discharge unit 209 will therefore be described, and a detailed description of the discharge units 210 and 211 will be omitted. At least one of the discharge units 209 to 211 may have a different external configuration.

The present embodiment deals with a case where the discharge unit 209 has two discharge locations. A stacking unit 209e is a part used in stacking a large amount of sheets. The stacking unit 209e is protected by a door 209f. A small amount of sheets is discharged to a sample tray 209g. The sample tray 209g is not protected by a door. The present embodiment deals with a case where the stacking unit 209e includes a not-illustrated jogger mechanism (e.g., a mechanism for aligning sheets) to improve sheet stackability in the stacking unit 209e. As illustrated in Fig. 1, in the case where the image forming apparatus 101 includes the plurality of discharge units 209 to 211, the plurality of discharge units 209 to 211 may each include a stacking unit. The present embodiment deals with a case where the image forming apparatus 101 has a function that enables handling of the plurality of stacking units as a single discharge destination (e.g., a tray linking function).

An ejection instruction unit 209h is operated by the user to unlock the door 209f. With the door 209f unlocked, the user can access the stacking unit 209e inside the discharge unit 209. The user can thereby take out the sheets stacked inside the discharge unit 209. A stacked amount notification unit 209i displays the amount (e.g., height) of sheets stacked in the stacking unit 209e stepwise based on the stacked amount.

The present embodiment deals with a case where the light-emitting unit 209a1 is disposed on the front surface of the discharge unit 209, above the light-emitting unit 209a2. The present embodiment deals with a case where the upper light-emitting unit 209a1 of the discharge unit 209 lights up in red when a sheet stalls in the upper conveyance unit 209c1 inside the discharge unit 209. The present embodiment also deals with a case where the upper conveyance unit 209a1 lights up in red when the sample tray 209g of the discharge unit 209 is full of stacked sheets. The present embodiment deals with a case where the upper light-emitting unit 209a1 of the discharge unit 209 lights up in yellow when the sample tray 209g of the discharge unit 209 approaches the state where sheets are fully stacked. When the sample tray 209g of the discharge unit 209 is full of stacked sheets, the light-emitting unit 209a1 may light up in color other than red or yellow, for example.

The present embodiment deals with a case where the lower light-emitting unit 209a2 of the discharge unit 209 lights up in red when a sheet stalls in the lower conveyance unit 209c inside the discharge unit 209. The present embodiment also deals with a case where the lower light-emitting unit 209a2 of the discharge unit 209 lights up in red when the stacking unit 209e of the discharge unit 209 is full of stacked sheets. The present embodiment deals with a case where the lower light-emitting unit 209a2 of the discharge unit 209 lights up in yellow when the stacking unit 209e of the discharge unit 209 approaches the state where sheets are fully stacked. When the stacking unit 209e of the discharge unit 209 is full of stacked sheets, the light-emitting unit 209a2 may light up in color other than red or yellow, for example.

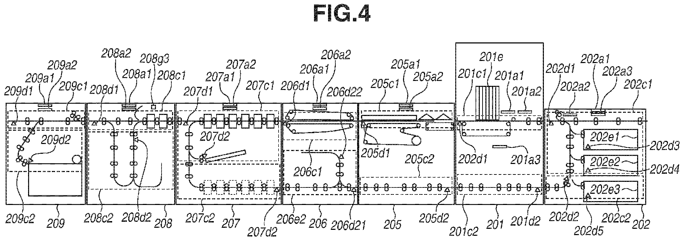

Fig. 4 is a diagram illustrating an example of the internal configuration of the entire image forming apparatus 101. An example of the configuration of the sheet conveyance paths in the printing modules included in the image forming apparatus 101, an example of a positional relationship between the passage sensors, and an example of the layout of the light-emitting units will be described with reference to Fig. 4. As described above, the present embodiment deals with the case where the feed units 202 to 204 have the same configuration. The present embodiment also deals with the case where the discharge units 209 to 211 have the same configuration. Fig. 4 therefore illustrates only the feed unit 202 and the discharge unit 209 among the feed units 202 to 204 and the discharge units 209 to 211, and the feed units 203 and 204 and the discharge units 210 and 211 are omitted in the diagram. A detailed description of the feed units 203 and 204 and the discharge units 210 and 211 will also be omitted here.

The feed unit 202 will initially be described. The present embodiment deals with a case where the conveyance units 202c1 and 202c2 are located at the positions illustrated in Fig. 4. The passage sensors 202d1 and 202d2 are located at the downstream portions of the conveyance units 202c1 and 202c2, respectively. The passage sensors 202d1 and 202d2 detect that a sheet being conveyed through the conveyance units 202c1 and 202c2 passes the detection regions of the passage sensors 202d1 and 202d2. The passage sensors 202d1 and 202d2 according to the present embodiment are used in detecting the occurrence of sheet stalling.

Sheet stalling is detected by the following method, for example.

The microprocessors included in the respective printing modules such as the feed unit 202 control the conveyance units of the printing modules where the microprocessors are included, based on instructions from the CPU 224. Sheets are thereby conveyed. When a sheet is thus conveyed to a printing module, the sheet is controlled by the conveyance units of the printing module to move through the printing module, and then conveyed out of the printing module.

In doing so, the time between when the sheet is conveyed into the printing module and when the sheet is conveyed out of the printing module is calculated based on a relationship between the conveyance speed of the sheet and the shapes and lengths of the conveyance paths inside the printing module. The time is calculated by the CPU 224, for example. This time is a time during which the sheet is expected to be present in the printing module. In the following description, this time will be referred to as an expected in-module time where appropriate. If the sheet is detected by a passage sensor when the expected in-module time of the printing module elapses, the CPU 224 can determine that the conveyance processing in the printing module is performed as expected. On the other hand, if the sheet is not detected by any passage sensor despite the lapse of the expected in-module time of the printing module, the CPU 224 can determine that the sheet is not properly conveyed in the printing module. In other words, the CPU 224 can determine that the conveyance processing in the printing module is stagnating because the sheet stalls in the printing module. The present embodiment then deals with a case where the passage sensors are located at the downstream portions of the conveyance paths of each printing module. The present embodiment deals with a case where the CPU 224 determines whether the sheet is conveyed out of each printing module at the point in time when the expected in-module time of the sheet in the printing module elapses, based on the detection result of the passing sensors.

The present embodiment deals with a case where the CPU 224 determines whether a sheet is stalling in the lower conveyance unit 202c2 based on the detection result of the passage sensor 202d2.

The present embodiment deals with a case where the CPU 224, if a sheet stalls in the lower conveyance unit 202c2, lights up the lower light-emitting unit 202a2 in red. This notifies that a sheet is stalling in the lower conveyance unit 202c2. The present embodiment deals with a case where the CPU 224 determines whether a sheet is stalling in the upper conveyance unit 202c1 based on the detection result of the passage sensor 202d1. The present embodiment deals with a case where the CPU 224, if a sheet stalls in the upper conveyance unit 202c1, lights up the upper light-emitting unit 202a1 in red. This notifies that a sheet is stalling in the upper conveyance unit 202c1.

Next, the image forming unit 201 will be described. The present embodiment deals with a case where the conveyance units 201c1 and 201c2 are located at the positions illustrated in Fig. 4. The passage sensors 201d1 and 201d2 are located at the downstream portions of the conveyance units 201c1 and 201c2, respectively. The present embodiment deals with a case where the CPU 224 determines whether a sheet is stalling at the downstream portion of the upper conveyance unit 201c1 based on the detection result of the passage sensor 201d1. The present embodiment deals with a case where the CPU 224, if a sheet stalls at the downstream portion of the upper conveyance unit 201c1, lights up the upper light-emitting units 201a1 and 201a2 in red. This notifies that a sheet is stalling at the downstream portion of the upper conveyance unit 201c1.

The present embodiment deals with a case where the CPU 224 determines whether a sheet is stalling at the downstream portion of the lower conveyance unit 201c2 based on the detection result of the passage sensor 201d2. The present embodiment deals with a case where the CPU 224, if a sheet stalls at the downstream portion of the lower conveyance unit 201c, lights up the lower light-emitting unit 201a3 in red. This notifies that a sheet is stalling in the lower conveyance unit 201c2. An example of the method for detecting sheet stalling is the same as described above, and a detailed description of the method for detecting sheet stalling will thus be omitted here.

Next, the first fixing unit 205 will be described. The present embodiment deals with a case where the conveyance units 205c1 and 205c2 are located at the positions illustrated in Fig. 4. The passage sensors 205d1 and 205d2 are located at the downstream portions of the conveyance units 205c1 and 205c2, respectively. The present embodiment deals with a case where the CPU 224 determines whether a sheet is stalling at the downstream portion of the upper conveyance unit 205c1 based on the detection result of the passage sensor 205d1. The present embodiment deals with a case where the CPU 224, if a sheet stalls at the downstream portion of the upper conveyance unit 205c1, lights up the upper light-emitting unit 205a1 in red. This notifies that a sheet is stalling at the downstream portion of the upper conveyance unit 205c1.

The present embodiment deals with a case where the CPU 224 determines whether a sheet is stalling at the downstream portion of the lower conveyance unit 205c2 based on the detection result of the passage sensor 205d2. The present embodiment deals with a case where the CPU 224, if a sheet stalls at the downstream portion of the lower conveyance unit 205c2, lights up the lower light-emitting unit 205a2 in red. This notifies that a sheet is stalling in the lower conveyance unit 205c2. An example of the method for detecting sheet stalling is the same as described above, and a detailed description of the method for detecting sheet stalling will thus be omitted here.

Next, the second fixing unit 206 will be described. The present embodiment deals with a case where the conveyance units 206c1 and 206c2 are located at the positions illustrated in Fig. 4. The passage sensor 206d1 and the passage sensors 206d21 and 206d22 are located at the downstream portions of the conveyance unit 206c1 and the conveyance unit 206c2, respectively. The present embodiment deals with a case where the CPU 224 determines whether a sheet is stalling at the downstream portion of the upper conveyance unit 206c1 based on the detection result of the passage sensor 206d1. The present embodiment deals with a case where the CPU 224, if a sheet stalls at the downstream portion of the upper conveyance unit 206c1, lights up the upper light-emitting unit 206a1 in red. This notifies that a sheet is stalling at the downstream portion of the upper conveyance unit 206c1.

The present embodiment deals with a case where the CPU 224 determines whether a sheet is stalling at the downstream portions of the lower conveyance unit 206c2 based on the detection results of the passage sensors 206d21 and 206d22. The present embodiment deals with a case where the CPU 224, if a sheet stalls at the downstream portions of the lower conveyance unit 206c2, lights up the lower light-emitting unit 206a2 in red. This notifies that a sheet is stalling in the lower conveyance unit 206c2. An example of the method for detecting sheet stalling is the same as described above, and a detailed description of the method for detecting sheet stalling will thus be omitted here.

Next, the cooling unit 207 will be described. The present embodiment deals with a case where the conveyance units 207c1 and 207c2 are located at the positions illustrated in Fig. 4. The passage sensors 207d1 and 207d2 are located at the downstream portions of the conveyance units 207c1 and 207c2, respectively. The present embodiment deals with a case where the CPU 224 determines whether a sheet is stalling at the downstream portion of the upper conveyance unit 207c1 based on the detection result of the passage sensor 207d1. The present embodiment deals with a case where the CPU 224, if a sheet stalls at the downstream portion of the upper conveyance unit 207c1, lights up the upper light-emitting unit 207a1 in red. This notifies that a sheet is stalling at the downstream portion of the upper conveyance unit 201c1.

The present embodiment deals with a case where the CPU 224 determines whether a sheet is stalling at the downstream portion of the lower conveyance unit 207c2 based on the detection result of the passage sensor 207d2. The present embodiment deals with a case where the CPU 224, if a sheet stalls at the downstream portion of the lower conveyance unit 207c2, lights up the lower light-emitting unit 207a2 in red. This notifies that a sheet is stalling in the lower conveyance unit 207c2. An example of the method for detecting sheet stalling is the same as described above, and a detailed description of the method for detecting sheet stalling will thus be omitted.

Next, the reversing unit 208 will be described. The present embodiment deals with a case where the conveyance units 208c1 and 208c2 are located at the positions illustrated in Fig. 4. The passage sensors 208d1 and 208d2 are located at the downstream portions of the conveyance units 208c1 and 208c2, respectively. The present embodiment deals with a case where the CPU 224 determines whether a sheet is stalling at the downstream portion of the upper conversion unit 208c1 based on the detection result of the passage sensor 208d1. The present embodiment deals with a case where the CPU 224, if a sheet stalls at the downstream portion of the upper conveyance unit 208c1, lights up the upper light-emitting unit 208a1 in red. This notifies that a sheet is stalling at the downstream portion of the upper conveyance unit 208c1.

The present embodiment deals with a case where the CPU 224 determines whether a sheet is stalling at the downstream portion of the lower conveyance unit 208c2 based on the detection result of the passage sensor 208d2. The present embodiment deals with a case where the CPU 224, if a sheet stalls at the downstream portion of the lower conveyance unit 208a2, lights up the lower light-emitting unit 208a2 in red. This notifies that a sheet is stalling in the lower conveyance unit 208c2. An example of the method for detecting sheet stalling is the same as described above, and a detailed description of the method for detecting sheet stalling will thus be omitted here.

Next, the discharge unit 209 will be described. The present embodiment deals with a case where the conveyance units 209c1 and 209c2 are located at the positions illustrated in Fig. 4. The passage sensors 209d1 and 209d2 are located at the downstream portions of the conveyance units 209c1 and 209c2, respectively. The present embodiment deals with a case where the CPU 224 determines whether a sheet is stalling at the downstream portion of the upper conveyance unit 209c1 based on the detection result of the passage sensor 209d1. The present embodiment deals with a case where the CPU 224, if a sheet stalls at the downstream portion of the upper conveyance unit 209c1, lights up the upper light-emitting unit 209a1 in red. This notifies that a sheet is stalling at the downstream portion of the upper conveyance unit 209c1.

The present embodiment deals with a case where the CPU 224 determines whether a sheet is stalling at the downstream portion of the lower conveyance unit 209c2 based on the detection result of the passage sensor 209d2. The present embodiment deals with a case where the CPU 224, if a sheet stalls at the downstream portion of the lower conveyance unit 209c2, lights up the lower light-emitting unit 209a2 in red. This notifies that a sheet is stalling in the lower conveyance unit 209c2. An example of the method for detecting sheet stalling is the same as described above, and a detailed description of the method for detecting sheet stalling will thus be omitted here.

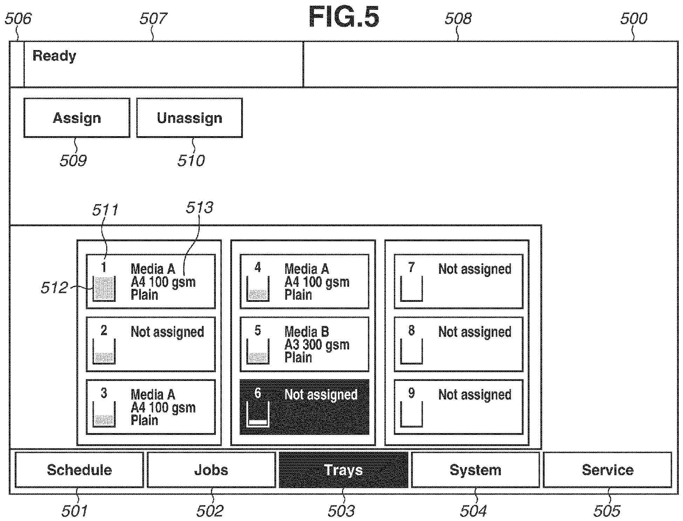

Fig. 5 is a diagram illustrating an example of a management screen 500. The present embodiment deals with a case where the management screen 500 is displayed on the display device 104 connected to the DFE 103. An example of screen components and user interfaces even common to subsequent screens will be described with reference to Fig. 5. The user interfaces may include the operation unit 222 and graphical user interfaces (GUIs). The display of the management screen 500 is controlled by the DFE 103, for example. The screen 500 may be displayed by a device other than the DFE 103. In such a case, the display of the management screen 500 may be controlled by the device other than the DFE 103.

Various areas for displaying the status of the image forming apparatus 101 are arranged on the management screen 500.

An alert area 506 displays color corresponding to the status of the image forming apparatus 101.

The color of the alert area 506 can notify the user of the status of the image forming apparatus 101. In such a case, the alert area 506 can display different colors depending on the status of the image forming apparatus 101. For example, when the image forming apparatus 101 is in a normal state, the alert area 506 displays green, which indicates the normal state.

A status area 507 displays text information indicating the status of the image forming apparatus 101. The text information displayed on the status area 507 can notify the user of the status of the image forming apparatus 101. Fig. 5 illustrates a case where the status area 507 displays "Ready", which indicates that the image forming apparatus 101 is in the normal state, ready for use, and not in operation.

A detailed status area 508 displays more detailed information about the status of the image forming apparatus 101. The information displayed on the detailed status area 508 can notify the user of a more detailed status of the image forming apparatus 101. The detailed status area 508 is used when it is necessary to notify the user of more detailed information than the simplified information displayed on the status area 507, such as when an error occurs in the image forming apparatus 101. Fig. 5 illustrates a case where no information is displayed on the detailed status area 508 because the image forming apparatus 101 is not undergoing any error.

A plurality of user interfaces for the user to select various operations of the image forming apparatus 101 is arranged at the bottom of the management screen 500.

A schedule setting section 501 includes a user interface for the user to operate in transitioning to a screen for setting and displaying scheduling information about print jobs to be executed by the image forming apparatus 101.

A job management section 502 includes a user interface for the user to operate in transitioning to a screen for configuring various settings of the print jobs to be executed by the image forming apparatus 101 and operating a print queue.

A feed stage setting section 503 includes a user interface for the user to operate in transitioning to a screen for setting sheets for the plurality of feed stages 202e1 to 202e3, 203e1 to 203e3, and 204e1 to 204e3 included in the image forming apparatus 101.

A system setting section 504 includes a user interface for the user to operate in transitioning to a screen for executing various functions related to general system settings of the image forming apparatus 101.

A service execution section 505 includes a user interface for the user to operate in transitioning to a screen for executing various functions for doing maintenance of the image forming apparatus 101.

Fig. 5 illustrates a case where the schedule setting section 501, the job management section 502, the feed stage setting section 503, the system setting section 504, and the service execution section 505 include buttons as the user interfaces (GUIs). Fig. 5 illustrates a state where the feed stage setting section 503 is selected.

An example of functions and screen components implemented when the feed stage setting section 503 is selected will now be described.

In Fig. 5, a sheet setting section 509 includes a user interface for the user to operate in setting specific sheets for the feed stages 202e1 to 202e3, 203e1 to 203e3, and 204e1 to 204e3 of the image forming apparatus 101.

A sheet setting cancelation section 510 includes a user interface for the user to operate in cancelling the sheet settings made for a specific feed stage using the sheet setting section 509.

Fig. 5 illustrates a case where the sheet setting section 509 and the sheet setting cancelation section 510 are buttons serving as user interfaces (GUIs).

Fig. 5 illustrates a case where nine feed stage display sections are displayed on the management screen 500 when the feed stage setting section 503 is selected. The feed stage display sections include user interfaces. The present embodiment deals with a case where the feed stage display sections include buttons as the user interfaces (GUIs). Fig. 5 illustrates a case where a feed stage number 511, a remaining sheet level graph 512, and media information 513 are displayed on each of the sheet stage display sections. For convenience of illustration, Fig. 5 illustrates the reference numerals (511 to 513) for only one of the nine feed stage display sections. "Media" in the drawings refers to sheets.

Fig. 5 illustrates a case where if no sheet is set for a feed stage, "Not assigned" meaning that no sheet is set is displayed as the media information 513.

Fig. 5 illustrates a case where feed stage numbers 511 of 1, 2, and 3 denote the feed stages 202e1, 202e2, and 202e3 of the feed unit 202, respectively. Fig. 5 illustrates a case where feed stage numbers 511 of 4, 5, and 6 denote the feed stages 203e1, 203e2, and 203e3 of the feed unit 203, respectively. Fig. 5 illustrates a case where feed stage numbers 511 of 7, 8, and 9 denote the feed stages 204e1, 204e2, and 204e3 of the feed unit 204, respectively.

Fig. 5 illustrates a case where the feed stage display sections display that the feed stages 202e1, 202e3, 203e1, and 203e2 with feed stage numbers 511 of 1, 3, 4, and 5 are in a state where media (e.g., sheets) are set. On the other hand, Fig. 5 illustrates a case where the feed stage display sections display that the feed stages 202e2, 203e3, 204e1, 204e2, and 204e3 with feed stage numbers 511 of 2, 6, 7, 8, and 9 are in a state where no media are set.

Fig. 5 illustrates a case where the feed stage 203e3 with the feed stage number 511 of 6 is selected. To select the sheet setting section 509 in such a state means that instructions to set media (e.g., sheets) for the feed stage 203e3 are being given.

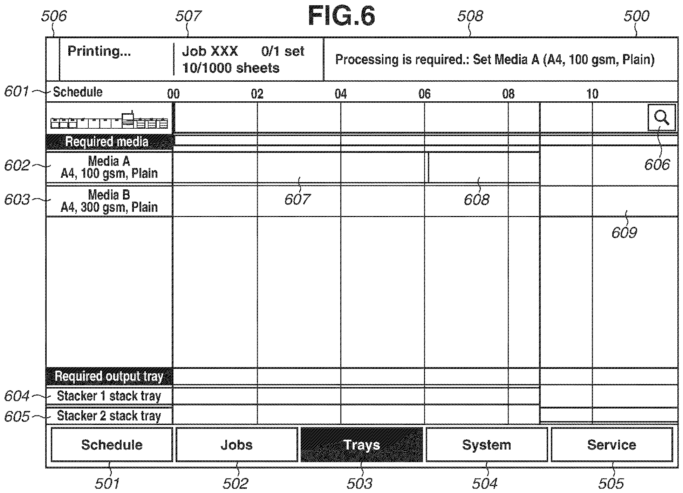

Fig. 6 is a diagram illustrating a display example of the management screen 500 when the schedule setting section 501 is selected with print jobs in an execution state or execution standby state.

A schedule area 601 displays a lapse of time until the printing of the print jobs in the execution state and execution standby state is completed.

In media areas 602 and 603, information about the media (e.g., sheets) for use in the print jobs in the execution state and execution standby state is displayed in ascending order of the time when the media are used in the print jobs from above.

Print schedules 607 to 609 are information indicating times to complete the printing of the media (e.g., sheets) displayed on the media areas 602 and 603. Fig. 6 illustrates a case where the media area 602 displays that the media (e.g., sheets) for use in the print job are A4 plain paper of 100 g per square meter. Fig. 6 illustrates a case where the information indicating the time to complete the printing of such media (e.g., sheets) is displayed by the print schedules 607 and 608. Fig. 6 also illustrates a case where the media area 603 displays that the media (e.g., sheets) for use in the print job are A4 plain paper of 300 g per square meter. Fig. 6 illustrates a case where the information indicating the time to complete the printing of such media (e.g., sheets) is displayed by the print schedule 609.

Fig. 6 illustrates a case where the print schedule for the media (e.g., sheets) displayed on the media area 602 is divided into the two print schedules 607 and 608. This means that the sheets will run short (e.g., the sheets will run out) at the timing of switching to the print schedule 608. In such a case, for example, the print schedules 607 and 608 may be displayed in different colors. For example, the print schedule 607 may be displayed in green, and the print schedule 608 in yellow. Moreover, when, for example, the printing proceeds and the sheets actually run short (e.g., run out), the print schedule may be displayed in different color than in other cases. For example, when the printing proceeds and the sheet actually run short (e.g., run out), the print schedule 609 for the media (e.g., sheets) displayed on the media area 603 may be displayed in red.

The time to complete printing is calculated based on the type of media (e.g., sheets) set for use in the print job and the current state of the image forming apparatus 101. The calculation may be performed by the DFE 103, by the image forming apparatus 101, or by the information processing apparatus 102.

Discharge tray areas 604 and 605 display information indicating the discharge destinations of the media (e.g., sheets) set for the print jobs in the execution state and execution standby state, in ascending order of the discharge timing of the media from above.

A display scale modification section 606 includes a user interface for the user to operate in transitioning to a screen for modifying the scale of the time axis displayed on the schedule area 601.

Fig. 6 illustrates a case where the information displayed on the foregoing alert area 506, status area 507, and detailed status area 508 has changed from the information illustrated in Fig. 5 in response to the transition to the execution state (e.g., the running state) of the print job.

Fig. 6 illustrates a case where the alert area 506 lights up in yellow to warn the user that some kind of processing needs to be performed. Fig. 6 illustrates a case where the status area 507 displays the printing status of the print job in process. In Fig. 6, the detailed status area 508 displays information about the specific content of the processing indicated to be desirably performed by the alert area 506. Specifically, Fig. 6 illustrates a case where the detailed status area 508 displays information that processing for replenishing a feed stage with media A is desirable. The CPU 217 may set the timing to issue warnings using the alert area 506 and the detailed status area 508 in a variable manner with reference to the time at which the print job in process will be interrupted unless the processing is performed.

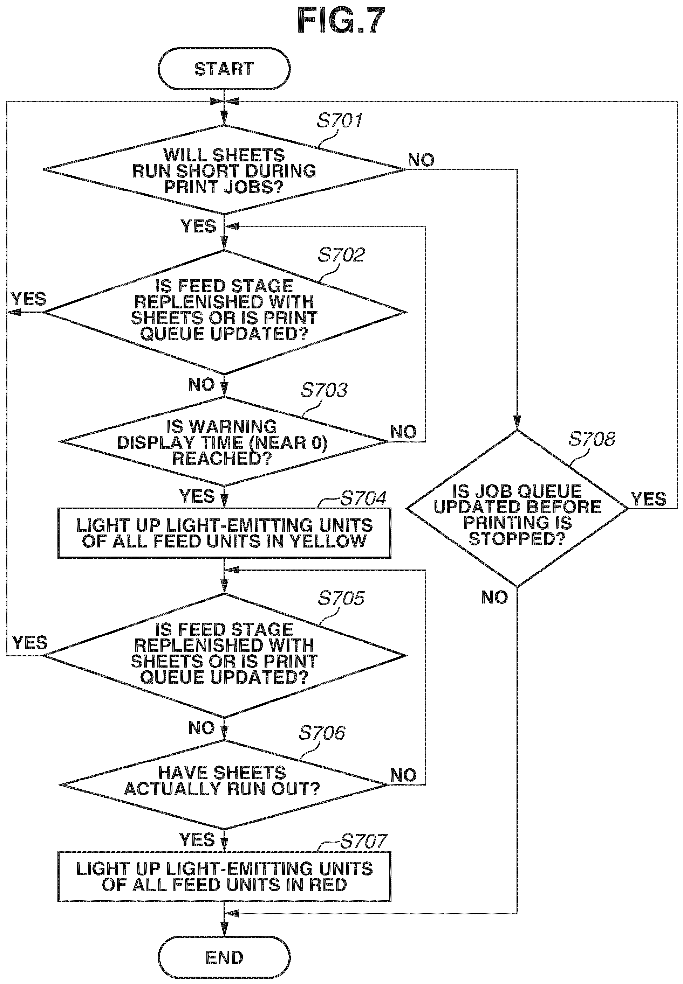

Fig. 7 is a flowchart illustrating an example of processing in the image forming system according to the present embodiment. Fig. 7 illustrates a case where the image forming system determines whether printing stops during execution of a print job (e.g., before the print job is completed) due to a shortage of sheets. Fig. 7 illustrates a case where the image forming system, if printing stops during the execution of the print job in process due to a shortage of sheets, controls the lighting of the light-emitting units 202a3 to 204a3 based on the status of the print job and the storage states of sheets in the feed stages. The processing according to the flowchart of Fig. 7 is started, for example, when the DFE 103 sets one or more print jobs in the print queue. The processing according to the flowchart of Fig. 7 is performed by the CPU 217 reading various programs stored in the SSD 221 into the RAM 220, for example. The processing according to the flowchart of Fig. 7 may be performed by a device different from the DFE 103. For example, if the image forming system includes only the image forming apparatus 101, the processing according to the flowchart of Fig. 7 may be performed by the image forming apparatus 101.

In step S701, the CPU 217 determines whether sheets will run short during print jobs in process and on standby. For example, in a situation that the print jobs include 1000 pages of image data and 500 sheets are set in the feed stages, if single side printing and 1-in-1 printing are set for the print job, the CPU 217 determines that sheets will run short during print jobs in process and on standby. In the situation, if double side printing and 1 in 1 printing are set for the print job, the CPU 217 determines that sheets will not run short during print jobs in process and on standby. In the situation, if single side printing and 2 in 1 printing are set for the print job, the CPU 217 determines that sheets will not run short during print jobs in process and on standby. On the other hand, in another situation that the print jobs include 1000 pages of image data and 2000 sheets are set in the feed stages, if single side printing and 1 in 1 printing are set for the print job, the CPU 217 determines that sheets will not run short during print jobs in process and on standby. For example, as described above, the microprocessor 202b determines whether sheets will run short before a print job is completed. The CPU 217 may make the determination of step S701 based on this determination result. Whether sheets will run short before a print job is completed may be determined by a device other than the microprocessor 202b instead of or in addition to the microprocessor 202b. The device other than the microprocessor 202b refers to at least either the CPU 217 or the CPU 224, for example.

If, as a result of the determination of step S701, the sheets do not run short during the print jobs (NO in step S701), the processing proceeds to step S708 to be described below. On the other hand, if the sheets run short during the print jobs (YES in step S701), the processing proceeds to step S702.

In step S702, the CPU 217 determines whether either a feed stage is replenished with the sheets running short or the print queue is update, or both. If, as a result of the determination of step S702, either a feed stage is replenished with the sheets running short or the print queue is updated, or both (YES in step S702), the processing returns to step S701. On the other hand, if, as a result of the determination of step S702, neither a feed stage is replenished with the sheets running short nor is the print queue updated (NO in step S702), the processing proceeds to step S703. The update of the print queue here refers to an update that affects whether a shortage of sheets occurs and the timing of the occurrence of the sheet shortage. Examples of such an update of the print queue here include deletion of a print job on standby and a change in the order of execution of print jobs on standby.

In step S703, the CPU 217 determines whether a warning display time determined with reference to the time when the sheets run short is reached. The time when the sheets run short is specified based on a value indicating a number of sheets to be printed per one minute by the image forming system. For example, if 500 sheets are set in the sheet stages and the value indicates 100 ppm, the time is 5 minutes later. The warning display time is desirably a time prior to the time when the sheets run short. If, as a result of this determination, the warning display time is not reached (NO in step S703), the processing returns to step S702. On the other hand, if the warning display time is reached (YES in step S703), the processing proceeds to step S704. As employed herein, the remaining amount of sheets when the warning display time comes and the state itself will be referred to as "Near 0" where appropriate. For example, like the setting of the timing to issue a warning using the detailed status area 508 illustrated in Fig. 6, the CPU 217 may set the warning display time in a variable manner. For example, the CPU 217 may set the warning display time with reference to the time when the print job in process will be interrupted unless the processing for replenishing a feed stage with sheets is performed. The time when the print job in process will be interrupted (e.g., time when the sheets will run short) is determined based on the amount of sheets that are set for use in the print job and not used yet, and the time to print that amount of sheets. Like the warning display time for the print job in process, warning display times are also similarly set for print jobs on standby.

In step S704, the CPU 217 lights up the light-emitting units 202a3, 203a3, and 204a3 of all the feed units 202 to 204 in yellow.

In step S705, the CPU 217 determines whether either a feed stage is replenished with the sheets running short or the print queue is updated, or both. The determination of step S705 is similar to that of step S702. If, as a result of the determination of step S705, either a feed stage is replenished with the sheets running short or the print queue is updated, or both (YES in step S705), the processing returns to step S701. On the other hand, if, as a result of the determination of step S705, neither a feed stage is replenished with the sheets running short nor is the print queue updated (NO in step S705), the processing proceeds to step S706.

In step S706, the CPU 217 determines whether the sheets have actually run out. If, as a result of this determination, the sheets have not run out yet (NO in step S706), the processing returns to step S705. On the other hand, if the sheets have run out (YES in step S706), the processing proceeds to step S707.

In step S707, the CPU 217 lights up the light-emitting units 202a3, 203a3, and 204a3 of all the feed units 202 to 204 in red. Once the processing of step S707 is completed, the processing according to the flowchart of Fig. 7 ends.

As described above, if, as a result of the determination of step S701, the sheets do not run short during the print jobs (NO in step S701), the processing proceeds to step S708. In step S708, the CPU 217 determines whether the print queue is updated before the printing is stopped. If, as a result of the determination of step S708, the print queue is not updated before the printing is stopped (NO in step S708), the processing according to the flowchart of Fig. 7 ends. On the other hand, if, as a result of the determination of step S708, the print queue is updated before the printing is stopped and a job queue is updated before the printing is stopped (YES in step S708), the processing returns to step S701. The update of the print queue here refers to an update that can cause a shortage of sheets. Examples of such an update of the print queue here include addition of a print job and a change in the sheets set for use in a print job on standby. In other words, the update of the print queue here does not include an update to delete a print job on standby. Possible causes for the stop of the printing described in this step do not include a shortage of sheets.

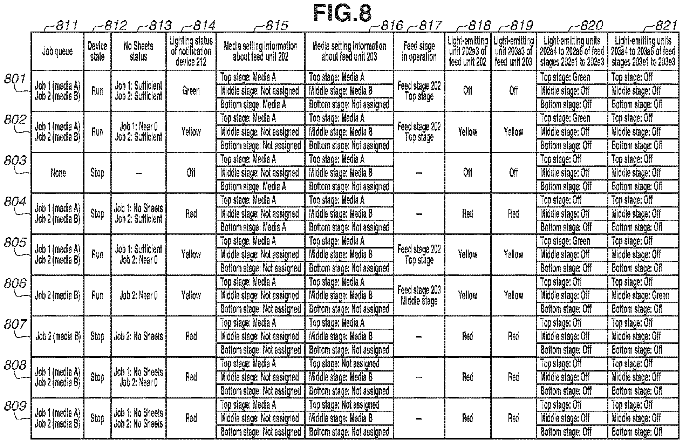

Fig. 8 is a chart illustrating examples of the lighting states of the light-emitting units (e.g., the notification device 212 and light-emitting units 202a3 to 202a6 and 203a3 to 203a6) corresponding to the statuses of print jobs, the status of the image forming apparatus 101, and various types of setting information. The light-emitting units 202a3 and 203a3 are light-emitting units disposed on the feed units 202 and 203, respectively (see Figs. 1 and 3A). The light-emitting units 202a4, 202a5, and 202a6 are light-emitting units disposed on the feed stages 202e1, 202e2, and 202e3, respectively (see Figs. 1 and 3A). The light-emitting units 203a4, 203a5, and 203a6 are light-emitting units disposed on the feed stages 203e1, 203e2, and 203e3, respectively (see Fig. 1). Here, only the patterns of the lighting states of the light-emitting units necessary for description are illustrated. Fig. 8 does not enumerate all the patterns of the lighting states of the light-emitting units. The present embodiment deals with a case where the image forming apparatus 101 includes the three feed units 202 to 204. However, for the convenience of illustration and description, the following description will be given on the assumption that only the feed units 202 and 203 are used.

A job queue field 811 lists print jobs in process or on standby and information about the media (e.g., sheets) set for the print jobs. Fig. 8 illustrates a case where the print jobs are executed in the order listed in the job queue field 811 from above. For the sake of simple description, the present embodiment deals with a case where only one type of media (sheets) is set for each print job. However, two or more types of media (e.g., sheets) may be set for a single print job.

A device state field 812 lists information indicating which state the image forming apparatus 101 is in, a printing state or a printing-stopped state. In Fig. 8, that the image forming apparatus 101 is in the printing state is referred to as "Run", and that the image forming apparatus 101 is in the printing-stopped state is referred to as "Stop".

A No Sheets status field 813 lists information indicating which state each print job in the job queue field 811 is in, "Near 0", "No Sheets", or "Sufficient" meaning neither of the former two. For example, the information set in the No Sheets status field 813 is determined based on the remaining amounts of media (e.g., sheets) stored in the feed units 202 and 203 and the amount of media (e.g., sheets) yet to be used in the print job.

A lighting status of notification device 212 field 814 lists information indicating the lighting status of the notification device 212.

A media setting information about feed unit 202 field 815 lists information indicating the media (e.g., sheets) stored in the feed stages 202e1 to 202e3 of the feed unit 202.

A media setting information about feed unit 203 field 816 lists information indicating the media (e.g., sheets) stored in the feed stages 203e1 to 203e3 of the feed unit 203.

In Fig. 8, "Top stage" refers to the feed stages 202e1 and 203e1, "Middle stage" refers to the feed stages 202e2 and 203e2, and "Bottom stage" refers to the feed stages 202e3 and 203e3.

A feed stage in operation field 817 lists information indicating the feed stage currently feeding sheets.

A lighting status of light-emitting unit 202a3 of feed unit 202 field 818 lists information indicating the lighting status of the light-emitting unit 202a3.

A lighting status of light-emitting unit 203a3 of feed unit 203 field 819 lists information indicating the lighting status of the light-emitting unit 203a3.

A light-emitting units 202a4 to 202a6 of feed stages 202e1 to 202e3 field 820 lists information indicating the lighting statuses of the light-emitting units 202a4 to 202a6.

A light-emitting units 203a4 to 203a6 of feed stages 203e1 to 203e3 field 821 lists information indicating the lighting statuses of the light-emitting units 203a4 to 203a6.

Situation examples 801 to 809 are sets of pieces of information listed in the fields 811 to 821 when the statuses of print jobs and the statuses of the feed units 202 and 203 are changed.

The situation example 801 represents a situation where the job queue includes job 1 and job 2 as print jobs, the feed units 202 and 203 store sufficient media (e.g., sheets) for use in both print jobs, and the image forming apparatus 101 is in operation. In such a case, both the light-emitting units 202a3 and 203a3 of the feed units 202 and 203 turn off. Only the light-emitting unit of the feed stage currently feeding sheets (e.g., the light-emitting unit 202a4 of the to feed stage 202e1 of the feed unit 202) lights up in green.

Here, cases where the light-emitting units 202a4 to 202a6 and 203a4 to 203a6 of the feed stages 202e1 to 202e3 and 203e1 to 203e3 of the feed units 202 and 203 light up in green during sheet feeding and turn off in other situations will be described. In the following description of Fig. 8, a detailed description of the lighting statuses of the light-emitting units 202a4 to 202a6 and 203a4 to 203a6 of the feed stages 202e1 to 202e3 and 203e1 to 203e3 will therefore be omitted.

The situation example 802 represents a situation where the job queue includes jobs 1 and 2 as print jobs, media A for use in job 1 are Near 0, and the image forming apparatus 101 is in operation. In such a case, the light-emitting units 202a3 and 203a3 of the feed units 202 and 203 both light up in yellow.

The situation example 803 represents a situation where the job queue does not include any print job, and the image forming apparatus 101 is stopped. In such a case, the light-emitting units 202a3 and 203a3 of the feed units 202 and 203 both turn off since there is no print job.

The situation example 804 represents a situation where the job queue includes jobs 1 and 2 as print jobs, media A for use in job 1 are No Sheets, and the image forming apparatus 101 is stopped. In such a case, the light-emitting units 202a3 and 203a3 of the feed units 202 and 203 both light up in red.

The situation example 805 represents a situation where the job queue includes jobs 1 and 2 as print jobs, media B for use in job 2 are Near 0, and the image forming apparatus 101 is in operation. In such a case, the light-emitting units 202a3 and 203a3 of the feed units 202 and 203 both light up in yellow. The situation example 805 also covers a situation where the remaining amount of media B for use in job 2 is zero, i.e., the amount of media B stacked and stored in the middle feed stage 203e2 of the feed unit 203 is zero.

The situation example 806 represents a situation where the job queue includes job 2 as a print job, media B for use in job 2 are Near 0, and the image forming apparatus 101 is in operation. In such a case, the light-emitting units 202a3 and 203a3 of the feed units 202 and 203 both light up in yellow.

The situation example 807 represents a situation where the job queue includes job 2 as a print job, media B for use in job 2 are No Sheets, and the image forming apparatus 101 is stopped. In such a case, the light-emitting units 202a3 and 203a3 of the feed units 202 and 203 both light up in red.

The situation example 808 represents a situation where the job queue includes jobs 1 and 2 as print jobs, media A for use in job 1 are No Sheets, media B for use in job 2 are Near 0, and the image forming apparatus 101 is stopped. In such a case, the light-emitting units 202a3 and 203a3 of the feed units 202 and 203 both light up in red.

The situation example 809 represents a situation where the job queue includes jobs 1 and 2 as print jobs, media A for use in job 1 are No Sheets, media B for use in job 2 are No Sheets, and the image forming apparatus 101 is stopped. In such a case, the light-emitting units 202a3 and 203a3 of the feed units 202 and 203 both light up in red.

As described above, in the present embodiment, the image forming system controls the operation of the light-emitting units 202a3, 203a3, and 204a3 based on the storage states of sheets for use in print jobs in process and on standby in the feed units 202 to 204. For example, the storage states are determined based on the amounts of sheets that are set for use in the print jobs and not used yet and the amounts of sheets that are set for use in the print jobs and stored in the feed units. The user can thus find out a shortage of sheets before the completion of the print jobs they have instructed to execute, for example, by observing the light-emitting units 202a3, 203a3, and 204a3 disposed on the feed units 202 to 204. This can reduce overlooking the occurrence of sheet shortages. The convenience of the image forming apparatus 101 can thereby be improved. Sheet shortages are notified by lighting up the light-emitting units 202a3, 203a3, and 204a3 disposed on the feed units 202, 203, and 204. The user can thus find out that the sheets are running short even at a location remote from the image forming apparatus 101. The user therefore does not need to come close to the image forming apparatus 101 to find out the sheets running short. An image forming apparatus 101 that enables more efficient use can thereby be provided. An image forming apparatus 101 that enables even more efficient use can be provide, for example, by configuring the notifications using the light-emitting units 202a3, 203a3, and 204a3 differently from notifications issued by changing shapes expressed by the on-off combinations of multiple light-emitting units.

The provision of the remaining amount notification units 202g1 to 202g3, 203g1 to 203g3, and 204g1 to 204g3 on the feed units 202e1 to 202e3, 203e1 to 203e3, and 204e1 to 204e3 enables the user to find out the extent of sheet shortage.

Next, a second embodiment will be described. In the present embodiment, the light-emitting units 202a3 to 204a3 of all the feed units 202 to 204 are described to be lit when sheets set for use in a print job become Near 0 or have run out (0). However, lighting up the light-emitting units 202a3 to 204a3 of all the feed units 202 to 204 can make it difficult for the user to efficiently determine which feed unit to replenish sheets. In view of this, the present embodiment deals with a case where the light-emitting unit of the feed unit where the Near-0 sheets are stored or the feed unit that has run out of the sheets (0) lights up among the light-emitting units 202a3, 203a3, and 204a3. This enables the user to more efficiently determine which feed unit to replenish sheets. The present embodiment and the first embodiment thus differ mainly in the control of the operation of the light-emitting units 202a3, 203a3, and 204a3. In the description of the present embodiment, similar portions to those of the first embodiment are therefore denoted by the same reference numerals as in Figs. 1 to 8, and a detailed description thereof will be omitted.

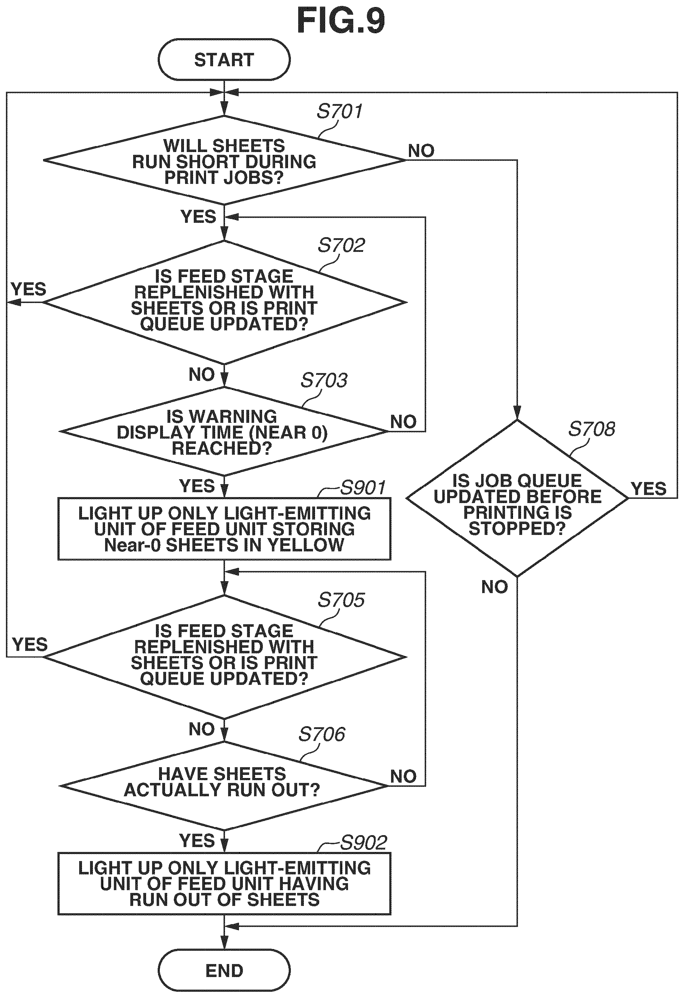

Fig. 9 is a flowchart illustrating an example of processing in the image forming system according to present embodiment. Like Fig. 7, Fig. 9 also illustrates a case where the image forming system determines whether printing stops during execution of a print job (e.g., before the print job is completed) due to a shortage of sheets. Like Fig. 7, Fig. 9 also illustrates a case where the image forming system, if printing stops due to a shortage of sheets during the execution of a print job, controls the lighting of the light-emitting units 202a3 to 204a3 based on the statuses of print jobs and the storage states of sheets in the feed units.

Differences of the flowchart of Fig. 9 from the flowchart of Fig. 7 will now be described.

In the flowchart of Fig. 9, the processing of step S901 is performed instead of that of step S704 in Fig. 7.

In step S901, the CPU 217 lights up only the light-emitting unit of the feed unit storing the Near-0 sheets in yellow among the light-emitting units 202a3 to 204a3.

In the flowchart of Fig. 9, the processing of step S902 is performed instead of that of step S707 in Fig. 7. In step S902, the CPU 217 lights up only the light-emitting unit of the feed unit that has actually run out of sheets in red among the light-emitting units 202a3, 203a3, and 204a3.

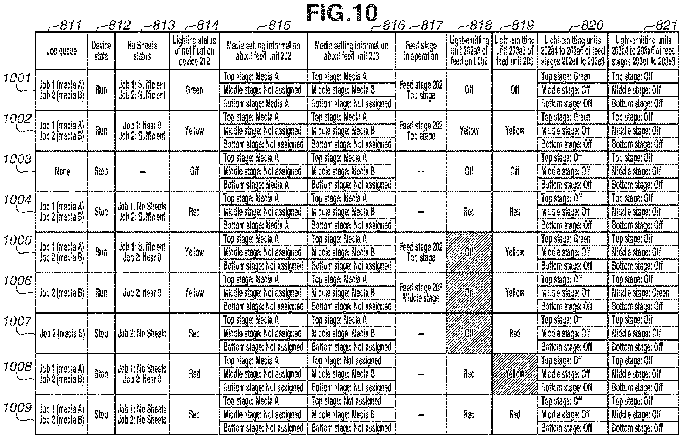

Fig. 10 is a chart illustrating examples of the lighting states of the light-emitting units (e.g., the notification device 212 and light-emitting units 202a3 to 202a6 and 203a3 to 203a6) corresponding to the statuses of print jobs, the status of the image forming apparatus 101, and various types of setting information. Figs. 10 and 8 differ only in the lighting statuses of the light-emitting units 202a3 and 203a3 of the feed units 202 and 203. In Fig. 10, differences from Fig. 8 are indicated by diagonal lines. Examples of the lighting states of the light-emitting units illustrated in Fig. 10 will now be described with focus on the differences from Fig. 8.

A situation example 1005 represents a situation where the job queue includes job 1 and job 2 as print jobs, media B for use in job 2 are Near 0, and the image forming apparatus 101 is in operation. In the situation example 805 illustrated in Fig. 8, the light-emitting units 202a3 and 203a3 of the feed units 202 and 203 both light up in yellow. By contrast, in the present embodiment, only the light-emitting unit 203a3 of the feed unit 203 for which media B are set lights up in yellow between the light-emitting units 202a3 and 203a3.

A situation example 1006 represents a situation where the job queue includes only job 2 as a print job, media B for use in job 2 are Near 0, and the image forming apparatus 101 is in operation. In this situation example, like the situation example 1005, only the light-emitting unit 203a3 of the feed unit 203 for which media B are set lights up in yellow between the light-emitting units 202a3 and 203a3.

A situation example 1007 represents a situation where the job queue includes only job 2 as a print job, media B for use in job 2 are No Sheets, and the image forming apparatus 101 is stopped. In the situation example 807 illustrated in Fig. 8, the light-emitting units 202a3 and 203a3 of the feed units 202 and 203 both light up in red. By contrast, in the present embodiment, only the light-emitting unit 203a3 of the feed unit 203 for which media B are set lights up in red between the light-emitting units 202a3 and 203a3.

A situation example 1008 represents a situation where the job queue includes jobs 1 and 2 as print jobs, media A for use in job 1 are No Sheets, media B for use in job 2 are Near 0, and the image forming apparatus 101 is stopped. In the situation example 808 illustrated in Fig. 8, the light-emitting units 202a3 and 203a3 of the feed units 202 and 203 both light up in red. By contrast, in the present embodiment, the light-emitting unit 202a3 of the feed unit 202 for which the No-Sheets media A are set lights up in red, and the light-emitting unit 203a3 of the fed unit 203 for which media B are set lights up in yellow.

As described above, in the present embodiment, the image forming system lights up only the light-emitting unit(s) of the feed unit(s) that stores/store sheets expected to run short before the completion of a print job in yellow among the light-emitting units 202a3 to 204a3. The image forming system also lights up only the light-emitting unit of the feed stage that has actually run out of sheets in red among the light-emitting units 202a3 to 204a3. The user can thus more efficiently determine which feed unit to replenish sheets. Various modifications described in the first embodiment may also be employed for the present embodiment.

Next, a third embodiment will be described. The second embodiment has dealt with the case where when sheets set for use in a print job become Near 0, the light-emitting units of all the feed units storing the sheets are lit. However, the feed stage currently feeding sheets is unable to be replenished with sheets. The user is therefore unable to replenish the feed stage with sheets even if the light-emitting unit of the feed unit including the feed stage is lit. In view of this, the present embodiment deals with a case where when sheets set for use in a print job become Near 0, the operation of the light-emitting units of the feed units storing the sheets is controlled depending on the feed statuses of the sheets in the feed units. This enables the user to more efficiently determine a feed unit that can be replenished with sheets. The present embodiment and the first and second embodiments thus differ mainly in the control of the operation of the light-emitting units 202a3, 203a3, and 204a3. In the description of the present embodiment, portions similar to those of the first and second embodiments are therefore denoted by the same reference numerals as in Figs. 1 to 10, and a detailed description thereof will be omitted.

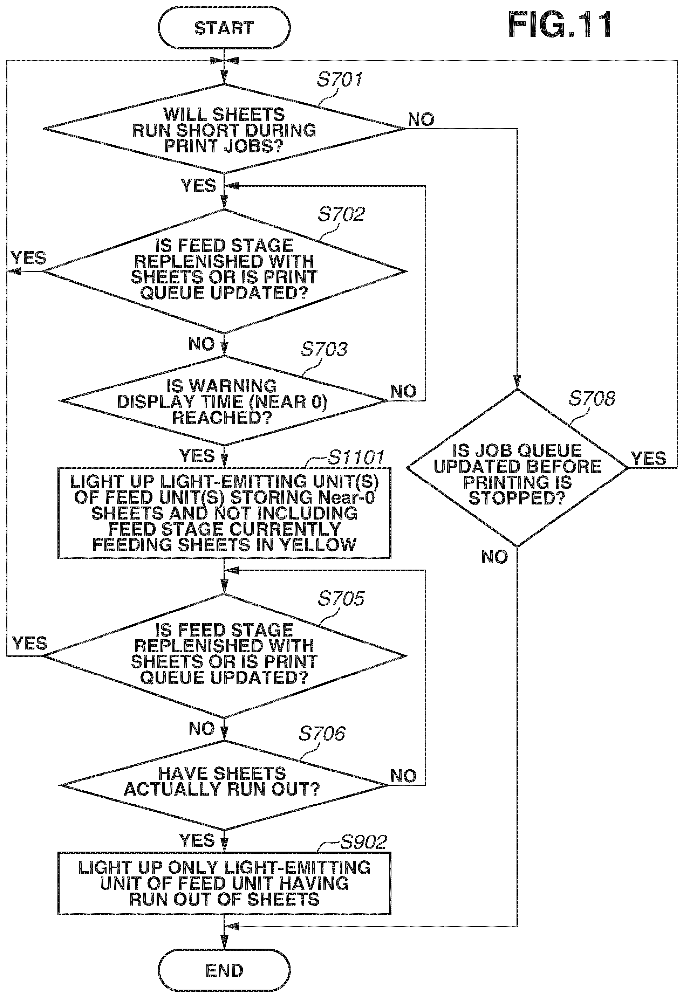

Fig. 11 is a flowchart illustrating an example of processing in the image forming system according to the present embodiment. Like Fig. 9, Fig. 11 also illustrates a case where the image forming system determines whether printing stops during execution of a print job (e.g., before the print job is completed) due to a shortage of sheets. Like Fig. 9, Fig. 11 illustrates a case where the image forming system, if printing stops during the execution of a print job due to a shortage of sheets, controls the lighting of the light-emitting units 202a3 to 204a3 based on the status of the print job and the storage states of sheets in the feed units.

Differences of the flowchart of Fig. 11 from the flowcharts of Figs. 7 and 9 will now be described.

In the flowchart of Fig. 11, the processing of step S1101 is performed instead of that of step S901 in Fig. 9. In step S1101, the CPU 217 lights up only the light-emitting unit(s) of the feed unit(s) that stores/store the Near-0 sheets and includes/include a feed stage not currently feeding the sheets in yellow among the light-emitting units 202a3, 203a3, and 204a3.

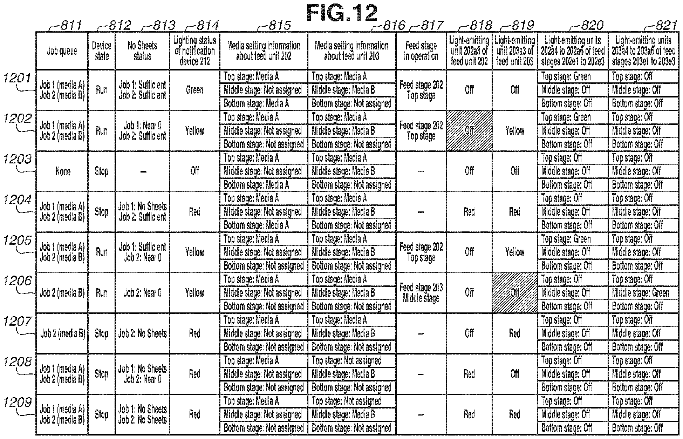

Fig. 12 is a chart illustrating examples of the lighting states of the light-emitting units (e.g., the notification device 212 and light-emitting units 202a3 to 202a6 and 203a3 to 203a6) corresponding to the statuses of print jobs, the status of the image forming apparatus 101, and various types setting information. Figs. 12 and 10 differ only in the lighting statuses of the light-emitting units 202a3 and 203a3 of the feed units 202 and 203. In Fig. 12, differences from Fig. 10 are indicated by diagonal lines. Examples of the lighting states of the light-emitting units illustrated in Fig. 12 will now be described with focus on the differences from Fig. 10.

A situation example 1202 represents a situation where the job queue includes jobs 1 and 2 as print jobs, media A for use in job 1 are Near 0, and the image forming apparatus 101 is in operation. In the situation examples 802 and 1002 illustrated in Figs. 8 and 10, the light-emitting units 202a3 and 203a3 of the feed units 202 and 203 are both lit in yellow. By contrast, in the present embodiment, the top feed stage 202e1 of the feed unit 202 is currently feeding media A, and media A are not stored in any other feed stage of the feed unit 202. The CPU 217 thus determines that the feed unit 202 is unable to feed media A. In such a case, only the light-emitting unit 203a3 of the feed unit 203 lights up in yellow between the light-emitting units 202a3 and 203a3.

A situation example 1206 represents a situation where the job queue includes job 2 as a print job, media B for use in job 2 are Near 0, and the image forming apparatus 101 is in operation. In the situation example 1006 illustrated in Fig. 10, only the light-emitting unit 203a3 of the feed unit 203 for which media B are set lights up in yellow between the light-emitting units 202a3 and 203a3. By contrast, in the present embodiment, the middle feed stage 203e2 of the feed unit 203 is currently feeding media B, and media B are not stored in any other feed stage of the feed unit 203. The CPU 217 thus determines that the feed unit 203 is unable to feed media B. In such a case, the light-emitting unit 203a3 of the feed unit 203 turns off.

As in this situation example 1206, all the light-emitting units 202a3, 203a3, and 204a3 can possibly turn off even if sheet replenishment is required. In such a case, for example, the CPU 217 may determine the light-emitting unit of the feed unit where the sheets become Near 0 as a light-emitting unit to be lit among the light-emitting units 202a3, 203a3, and 204a3, and light up the light-emitting unit in yellow. For example, the CPU 217 may determine the light-emitting unit of a feed unit including a feed stage not storing the sheets as the light-emitting unit to be lit among the light-emitting units 202a3, 203a3, and 204a3, and light up the light-emitting unit in yellow. This can prompt the user to replenish the feed stage not containing sheets with the sheets.

As described above, in the present embodiment, the image forming system controls the operation of the light-emitting units based on the storage states of sheets set for use in a print job in the feed units and the feed statuses of sheets from the feed units. For example, when sheets become Near 0, the image forming system lights up only the light-emitting unit(s) of the feed unit(s) that includes/include a feed stage storing the sheets and not currently feeding the sheets in yellow. This enables the user to more efficiently determine a feed unit that can be replenished with the sheets. Various modifications described in the first and second embodiments may also be employed for the present embodiment.

Next, a fourth embodiment will be described. The first to third embodiments have dealt with the cases where the light-emitting units 202a3 to 204a3 of the feed units 202 to 204 are lit when sheets set for use in a print job become Near 0 or have run out (0). However, the mere lighting statuses of the light-emitting units 202a3 to 204a3 of the feed units 202 to 204 can be insufficient to efficiently determine in which feed stage of the feed unit the sheets are Near 0 or have run out (0). In view of this, the present embodiment deals with a case of lighting up the light-emitting unit of the feed stage where the Near-0 sheets are stored or where the sheets have run out (0) among the light-emitting units 202a4 to 202a6, 203a4 to 203a6, and 204a4 to 204a6. This enables the user to more efficiently determine in which feed stage of which feed unit the sheets are Near 0 or have run out (0). The present embodiment and the first to third embodiments thus differ mainly in the control of the operation of the light-emitting units 202a4 to 202a6, 203a4 to 203a6, and 204a4 to 204a6. In the description of the present embodiment, portions similar to those of the first to third embodiments are therefore denoted by the same reference numerals as in Figs. 1 to 12, and a detailed description thereof will be omitted.

The present embodiment deals with a case where the following two lighting conditions are added to those described in the first embodiment as lighting conditions about the light-emitting units 202a4 to 202a6, 203a4 to 203a6, and 204a4 to 204a6 of the feed units 202 to 204. A first lighting condition is that the light-emitting units of feed stages storing Near-0 sheets be lit in yellow among the light-emitting units 202a4 to 202a6, 203a4 to 203a6, and 204a4 to 204a6 of the feed units 202 to 204. A second lighting condition is that the light-emitting unit of a feed stage where sheets have actually run out be lit in red among the light-emitting units 202a4 to 202a6, 203a4 to 203a6, and 204a4 to 204a6 of the feed units 202 to 204.

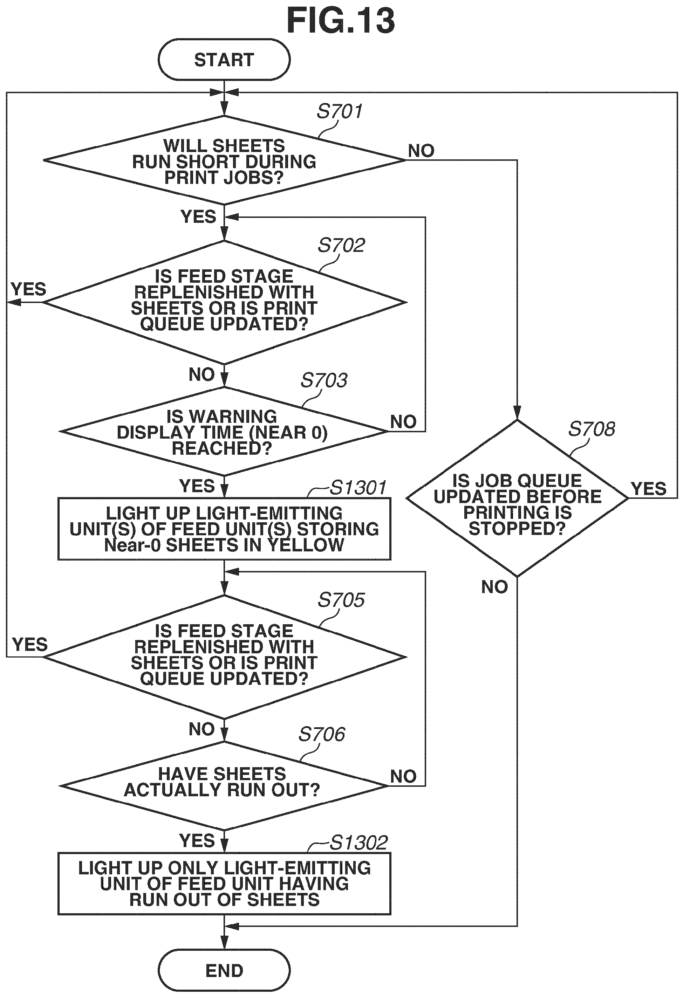

Fig. 13 is a flowchart illustrating an example of processing in the image forming system according to the present embodiment. Like Fig. 7, Fig. 13 also illustrate a case where the image forming system determines whether printing stops during execution of a print job (e.g., before the print job is completed) due to a shortage of sheets. Like Fig. 7, Fig. 13 illustrates a case where the image forming system, if printing stops during execution of a print job due to a shortage of sheets, controls the lighting of the light-emitting units 202a3 to 204a3 based on the status of the print job and the storage states of sheets in the feed stages. With reference to Fig. 13, an example of the control of the lighting of the light-emitting units 202a4 to 202a6, 203a4 to 203a6, and 204a4 to 204a6 will be described.

Differences of the flowchart of Fig. 13 from the flowchart of Fig. 7 will now be described.

In the flowchart of Fig. 13, the processing of step S1301 is performed instead of that of step S704 in Fig. 7. In step S1301, the CPU 217 lights up the light-emitting unit(s) of the feed stage(s) storing the Near-0 sheets in yellow among the light-emitting units 202a4 to 202a6, 203a4 to 203a6, and 204a4 to 204a6. The present embodiment deals with a case where in step S1301, the CPU 217 performs processing similar to that of step S704 in addition to the processing for lighting up the light-emitting unit(s). In step S1301, the CPU 217 may perform processing similar to that of S901 or S1101 instead of step S704, for example, in addition to the processing for lighting up the light-emitting unit(s).

In the flowchart of Fig. 13, the processing of step S1302 is performed instead of that of step S707 in Fig. 7. In step S1302, the CPU 217 lights up only the light-emitting unit of the feed stage that has actually run out of sheets in red among the light-emitting units 202a4 to 202a6, 203a4 to 203a6, and 204a4 to 204a6. The present embodiment deals with a case where in step S1302, the CPU 217 performs processing similar to that of step S707 in addition to the processing for lighting up the light-emitting unit. In step S1302, the CPU 217 may perform processing similar to that of step S902 instead of step S707, for example, in addition to the processing for lighting up the light-emitting unit.

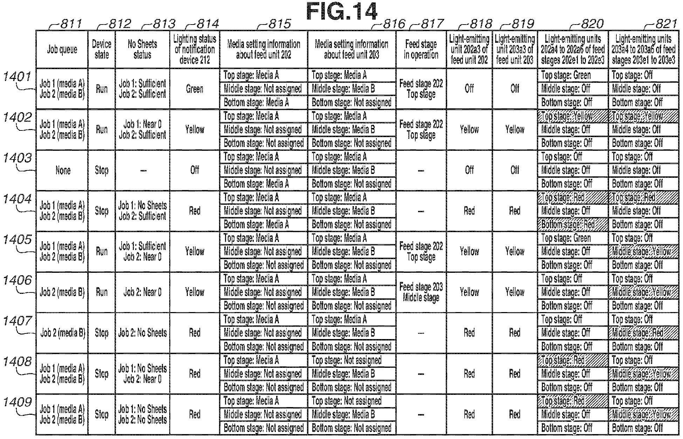

Fig. 14 is a diagram illustrating examples of the lighting states of the light-emitting units (e.g., the notification device 212 and light-emitting units 202a3 to 202a6 and 203a3 to 203a6) corresponding to the statuses of print jobs, the status of the image forming apparatus 101, and various types setting information. Figs. 14 and 8 differ only in the lighting statuses of the light-emitting units 202a4 to 202a6 and 203a4 to 203a6 of the feed stages 202e1 to 202e3 and 203e1 to 203e3. Fig. 14 illustrates a case where the lighting conditions for the light-emitting units 202a3 to 204a3 of the feed units 202 to 204 are the same as those of the first embodiment (Fig. 8). However, the lighting conditions for the light-emitting units 202a3 to 204a3 of the feed units 202 to 204 may be the same as any of those described in the first to third embodiments. In Fig. 14, differences from Fig. 8 are indicated by diagonal lines. Examples of the lighting states of the light-emitting units illustrated in Fig. 14 will now be described with focus on the differences from Fig. 8.

A situation example 1402 represents a situation where the job queue includes jobs 1 and 2 as print jobs, media A for use in job 1 are Near 0, and the image forming apparatus 101 is in operation. Media A are stored in the top feed stage 202e1 of the feed unit 202 and the top feed stage 203e1 of the feed unit 203. In such a case, the light-emitting unit 202a4 of the feed stage 202e1 of the feed unit 202 and the light-emitting unit 203a4 of the feed stage 203e1 of the feed unit 203 light up in yellow.

A situation example 1406 represents a situation where the job queue includes job 2 as a print job, media B for use in job 2 are Near 0, and the image forming apparatus 101 is in operation. Media B are stored only in the middle feed stage 203e2 of the feed unit 203. In such a case, the light-emitting unit 203a5 of the feed stage 203e of the feed unit 203 lights up in yellow.

A situation example 1407 represents a situation where the job queue includes job 2 as a print job, media B for use in job 2 are No Sheets, and the image forming apparatus 101 is stopped. Media B are set for only the middle feed stage 203e2 of the feed unit 203. In such a case, the light-emitting unit 203a5 of the feed stage 203e2 of the feed unit 203 lights up in red.

While a detailed description of the other situation examples is omitted, the light-emitting units of feed stages for which Near-0 or No-Sheets media (e.g., sheets) are set light up in corresponding colors.

As described above, in the present embodiment, the image forming system lights up the light-emitting units of feed stages storing Near-0 sheets in yellow among the light-emitting units 202a4 to 202a6, 203a4 to 203a6, and 204a4 to 204a6. In the present embodiment, the image forming system also lights up only the light-emitting units of feed stages that have actually run out of sheets in red.

The user can thus efficiently determine in which stage of which feed unit sheets are Near 0 or have run out (0). Various modifications described in the first to third embodiments may also be employed for the present embodiment.

Next, a fifth embodiment will be described. The fourth embodiment has dealt with the case where when sheets set for use in a print job become Near 0, the light-emitting units of all feed stages storing the sheets are lit. However, the feed stage currently feeding sheets is unable to be replenished with sheets. The user is therefore unable to replenish the feed stage with sheets even if the light-emitting unit of the feed stage is lit. In view of this, the present embodiment deals with a case where when sheets set for use in a print job become Near 0, the operation of the light-emitting units of the feed stages storing the sheets is controlled depending on the feed statuses of the sheets in the feed stages.

This enables the user to more efficiently determine feed units and feed stages that can be replenished with sheets. The present embodiment and the first to fourth embodiments thus differ mainly in the control of the operation of the light-emitting units 202a4 to 202a6, 203a4 to 203a6, and 204a4 to 204a6. In the description of the present embodiment, portions similar to those of the first to fourth embodiment are therefore denoted by the same reference numerals as in Figs. 1 to 14, and a detailed description thereof will be omitted.

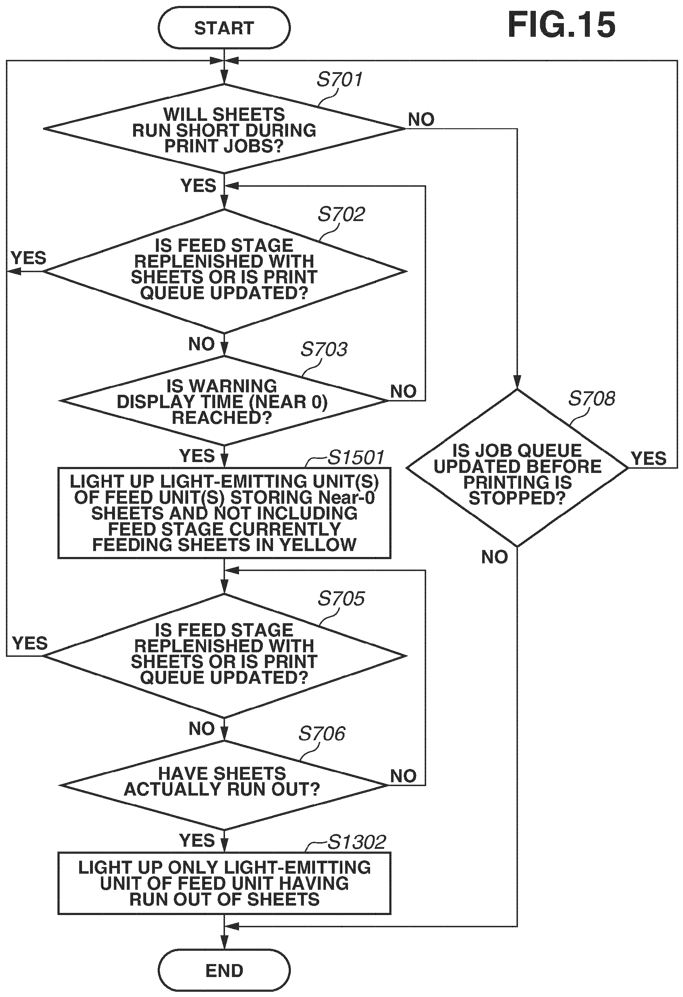

Fig. 15 is a flowchart illustrating an example of processing in the image forming system according to the present embodiment. Like Fig. 13, Fig. 15 illustrates a case where the image forming system determines whether printing stops during execution of a print job (e.g., before the print job is completed) due to a shortage of sheets. Like Fig. 13, Fig. 15 illustrates a case where the image forming system, if printing stops during the execution of a print job due to a shortage of sheets, controls the lighting of the light-emitting units 202a3 to 204a3 based on the status of the print job and the storage states of sheets in the feed stages. Like Fig. 13, Fig. 15 illustrates an example of controlling the lighting of the light-emitting units 202a4 to 202a6, 203a4 to 203a6, and 204a4 to 204a6.

Differences of the flowchart of Fig. 15 from the flowchart of Fig. 13 will now be described.

In the flowchart of Fig. 15, the processing of step S1501 is performed instead of that of step S1301 in Fig. 13. In step S1501, the CPU 217 lights up only the light-emitting units of feed stages that store the Near-0 sheets and not currently feeding the sheets in yellow among the light-emitting units 202a4 to 202a6, 203a4 to 203a6, and 204a4 to 204a6.

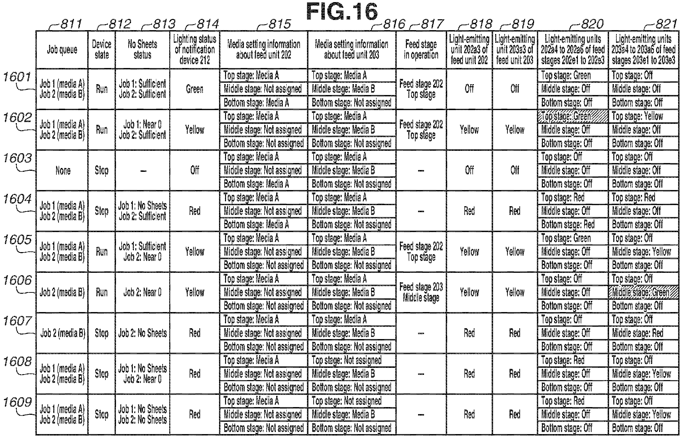

Fig. 16 is a diagram illustrating examples of the lighting states of the light-emitting units (e.g., the notification device 212 and light-emitting units 202a3 to 202a6 and 203a3 to 203a6) corresponding to the statuses of print jobs, the status of the image forming apparatus 101, and various types setting information. Figs. 16 and 14 differ only in the lighting statuses of the light-emitting units 202a4 to 202a6 and 203a4 to 203a6 of the feed stages 202e1 to 202e3 and 203e1 to 203e3. In Fig. 16, differences from Fig. 14 are indicated by diagonal lines. The examples of the lighting states of the light-emitting units illustrated in Fig. 16 will now be described with focus on the differences from Fig. 14.

A situation example 1602 represents a situation where the job queue includes jobs 1 and 2 as print jobs, media A for use in job 1 are Near 0, and the image forming apparatus 101 is in operation. Media A are stored in the top feed stage 202e1 of the feed unit 202 and the top feed stage 203e1 of the feed unit 203. Of the feed stages 202e1 and 203e1, the feed stage 202e1 is currently feeding sheets. In such a case, the light-emitting unit 202a4 of the feed stage 202e1 of the feed unit 202 lights up in green. The light-emitting unit 203a4 of the feed stage 203e1 of the feed unit 203 lights up in yellow.

A situation example 1606 represents a situation where the job queue includes job 2 as a print job, media B for use in job 2 is Near 0, and the image forming apparatus 101 is in operation. Media B are stored only in the middle feed stage 203e2 of the feed unit 203. The feed stage 203e2 is currently feeding sheets. In such a case, the light-emitting unit 203a5 of the feed stage 203e2 of the feed unit 203 lights up in green.

As in this situation example 1606, there can be cases where only the light-emitting unit of a feed stage currently feeding sheets lights up in green with the other of the light-emitting units 202a4 to 202a6, 203a4 to 203a6, and 204a4 to 204a6 turned off even if sheets need to be replenished. In such a case, for example, the CPU 217 may light up the light-emitting unit of the feed stage currently feeding sheets in yellow among the light-emitting units 202a4 to 202a6, 203a4 to 203a6, and 204a4 to 204a6. Alternatively, for example, the CPU 217 may light up the light-emitting unit of a feed stage not containing sheets in yellow. This can prompt the user to replenish the feed stage not containing sheets with the sheets. Alternatively, for example, when the light-emitting unit of a feed stage that needs to be replenished with sheets (e.g., feed stage that stores the Near-0 sheets and is not currently feeding the sheets) is lit in yellow, the light-emitting unit of the feeding stage currently feeding the sheets may be turned off instead of being lit in green.

Although not included in the situation examples of Fig. 16, there can be a plurality of feed stages that stores the Near-0 sheets (e.g., media) and is not currently feeding the sheets. In such a case, the CPU 217 may determine all the light-emitting units of such a plurality of feed stages as ones to be lit, and light up the light-emitting units in yellow, for example. To reduce the possibility of a shortage of sheets during a sheet replenishment operation, the CPU 217 may determine the light-emitting unit of a feed stage storing the smallest number of sheets among the plurality of feed stages as one to be lit, and light up the light-emitting unit in yellow, for example. This enables explicit notification of the feed stage for which sheet replenishment is prompted. Alternatively, the CPU 217 may determine only the light-emitting unit of a feed stage where the number of stored sheets is less than or equal to a predetermined number among the plurality of feed stages as one to be lit, and light up the light-emitting unit in yellow, for example. In such a case, the light-emitting unit of more than one feed stage may be lit.

As described above, in the present embodiment, the image forming system lights up the light-emitting units of feed stages that store Near-0 sheets and are not currently feeding the sheets in yellow among the light-emitting units 202a4 to 202a6, 203a4 to 203a6, and 204a4 to 204a6. The image forming system also lights up the light-emitting unit of a feed stage that stores the Near-0 sheets and is currently feeding the sheets in green among the light-emitting units 202a4 to 202a6, 203a4 to 203a6, and 204a4 to 204a6. This enables the user to more efficiently determine feed units and feed stages that can be replenished with sheets. Various modifications described in the first to fourth embodiments may be employed for the present embodiment.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (e.g., such as a compact disc (CD), digital versatile disc (DVD), or Blu-ray Disc^{™} (BD)), a flash memory device, a memory card, and the like.

While the present disclosure has been described with reference to embodiments, it is to be understood that the disclosure is not limited to the disclosed embodiments. The scope of the following claims encompasses all such modifications and equivalent structures and functions.

## Claims

1. An image forming system comprising:
a sheet holding apparatus (214); and
an image forming apparatus (101) configured to form an image on a sheet conveyed from a sheet holding unit of the sheet holding apparatus,
wherein the sheet holding apparatus includes a display unit (202a3, 203a3, 204a3), and
wherein the display unit is configured to, in a case where an amount of sheets held in the sheet holding unit decreases to a first amount before execution of a job is completed, issue a notification using a first notification method, and in a case where the amount of sheets held in the sheet holding unit decreases to a second amount smaller than the first amount before the execution of the job is completed, issue a notification using a second notification method.

2. The image forming system according to claim 1, further comprising a plurality of sheet holding apparatuses including the sheet holding apparatus,
wherein each of the plurality of sheet holding apparatuses includes a display unit, and
wherein the display unit of each of the plurality of sheet holding apparatuses is configured to, in a case where an amount of sheets held in the sheet holding unit decreases to the first amount before the execution of the job is completed, issue a notification using the first notification method.

3. The image forming system according to claim 1 or claim 2, wherein the display unit is configured to, in a case where a warning display time is reached, issue a notification using the first notification method, the warning display time being determined with reference to a time at which the amount of sheets held in the sheet holding unit decreases to the first amount and the sheets run short.

4. The image forming system according to any one of claims 1 to 3,
wherein the sheet holding apparatus further includes a plurality of sheet holding units including the sheet holding unit,
wherein the sheet holding apparatus further includes other display units on the plurality of respective sheet holding units, and
wherein the other display units of the plurality of respective sheet holding units are configured to issue a notification based on an error in the plurality of respective sheet holding units.

5. The image forming system according to claim 4, wherein in a case where the amount of sheets held in the sheet holding unit decreases to the first amount before the execution of the job is completed, the display unit and another display unit of another sheet holding unit holding same sheets as the sheets issue notification using the first notification method.

6. The image forming system according to claim 4, wherein the error is overloading.

7. The image forming system according to claim 4, wherein the error is malfunctioning of an instruction unit configured to open the sheet holding unit.

8. The image forming system according to any one of claims 1 to 7, wherein the display unit is a light-emitting diode (LED).

9. The image forming apparatus according to claim 8,
wherein the first notification method is a method for lighting up the LED in a first color, and
wherein the second notification method is a method for lighting up the LED in a second color different from the first color.

10. A method for controlling an image forming system including a sheet holding apparatus and an image forming apparatus configured to form an image on a sheet conveyed from a sheet holding unit of the sheet holding apparatus, the method comprising:
issuing, in a case where an amount of sheets held in the sheet holding unit decreases to a first amount before execution of a job is completed, a notification by a display unit of the sheet holding unit using a first notification method; and
issuing, in a case where the amount of sheets held in the sheet holding unit decreases to a second amount smaller than the first amount before the execution of the job is completed, a notification by the display unit using a second notification method.

11. A computer-readable storage medium storing a program for causing a computer to perform a method for controlling an image forming system including a sheet holding apparatus and an image forming apparatus configured to form an image on a sheet conveyed from a sheet holding unit of the sheet holding apparatus, the method comprising:
issuing, in a case where an amount of sheets held in the sheet holding unit decreases to a first amount before execution of a job is completed, a notification by a display unit of the sheet holding unit using a first notification method; and
issuing, in a case where the amount of sheets held in the sheet holding unit decreases to a second amount smaller than the first amount before the execution of the job is completed, a notification by the display unit using a second notification method.
